# EUROPEAN PATENT APPLICATION

(11) **EP 4 539 149 A2**
(43) Date of publication of application: **16.04.2025**
(21) Application number: 24181881.4
(22) Date of filing: 13.06.2024
(51) Int. Cl.: H01M 4/134, H01M 4/62, H01M 10/0562, H01M 4/38

(54) **ALL-SOLID-STATE SECONDARY BATTERY**

(30) Priority: 11.10.2023 KR 20230135167
(71) Applicant: SAMSUNG SDI CO., LTD., Giheung-gu Yongin-si, Gyeonggi-do 17084 (KR)
(72) Inventor: Son, Inhyuk, 17084 Gyeonggi-do (KR); Jo, Sungnim, 17084 Gyeonggi-do (KR); Shim, Kyueun, 17084 Gyeonggi-do (KR); Lim, Hyungsub, 17084 Gyeonggi-do (KR); Park, Taehyun, 17084 Gyeonggi-do (KR); Lee, Jieun, 17084 Gyeonggi-do (KR)
(74) Representative: Michalski Hüttermann & Partner Patentanwälte mbB

(57) **Abstract**

An all-solid-state secondary battery includes a cathode layer, an anode layer, and a solid electrolyte layer between the cathode layer and the anode layer, wherein the cathode layer includes a cathode current collector and a cathode active material layer on at least one side of the cathode current collector, the anode layer includes an anode current collector and a first anode active material layer on at least one side of the anode current collector, the first anode active material layer includes an anode active material capable of forming an alloy or compound with lithium, a fibrous carbon-based material, and a binder, a ratio (B/A) of an initial charge capacity (B) of the first anode active material layer to an initial charge capacity (A) of the cathode active material layer is about 0.01 to about 0.75.

## Description

### CROSS-REFERENCE TO RELATED APPLICATION

The present application claims priority to and the benefit of Korean Patent Application No. 10-2023-0135167, filed on October 11, 2023, in the Korean Intellectual Property Office, the entire content of which is incorporated herein by reference.

### BACKGROUND

### 1. Field

Embodiments of the present disclosure described herein are related to an all-solid-state secondary battery.

### 2. Description of the Related Art

Recently, in response to demands and/or desires from the industry, the development of batteries with high energy density and safety has been actively conducted. For example, lithium batteries are utilized in a variety of applications, including information devices, communication devices, and vehicles (e.g., electrical vehicles, automobiles, and/or cars), etc. The typical vehicles are connected to users' or people's wellbeing, and consequently, safety of lithium batteries is important or crucial.

Lithium batteries utilizing a liquid electrolyte are relatively more likely to catch on fire and/or to explode in the event of a short circuit. All-solid-state secondary batteries that utilize a solid electrolyte instead of a liquid electrolyte have been suggested or proposed. Solid electrolytes are less likely to ignite as compared to liquid electrolytes.

As such, such all-solid-state secondary batteries can or may reduce the possibility of fire or explosion by utilizing a solid electrolyte instead of a liquid electrolyte. As such, the all-solid-state batteries can or may provide improved safety.

### SUMMARY

Aspects according to one or more embodiments are directed toward an all-solid-state secondary battery with improved cycle characteristics and with suppressed or reduced change in volume during charging and discharging by including a fibrous carbon-based material and a binder in an anode active material layer of which initial charge capacity is smaller than the initial charge capacity of a cathode active material layer.

Additional aspects will be set forth in part in the description which follows and, in part, will be apparent from the description, or may be learned by practice of the presented embodiments of the present disclosure.

According to one or more embodiments, an all-solid-state secondary battery includes
a cathode layer, an anode layer, and a solid electrolyte layer between the cathode layer and the anode layer,
the cathode layer includes a cathode current collector and a cathode active material layer on at least one side (e.g., one or both (e.g., opposite) sides) of the cathode current collector,
the anode layer includes an anode current collector and a first anode active material layer on at least one side (e.g., one or both (e.g., opposite) sides) of the anode current collector,
the first anode active material layer includes an anode active material capable of forming an alloy or compound with lithium, a fibrous carbon-based material, and a binder,
the ratio (B/A) of the initial charge capacity (B) of the first anode active material layer to the initial charge capacity (A) of the cathode active material layer is about 0.01 to about 0.75,
the initial charge capacity of the cathode active material layer is determined by charging from a 1^{st} open circuit voltage to a maximum charging voltage with respect to Li/Li⁺, and
the initial charge capacity of the first anode active material layer is determined by charging from a 2^{nd} open circuit voltage to about 0.01 V with respect to Li/Li⁺.

According to one or more embodiments, an all-solid-state secondary battery includes
a cathode layer, an anode layer, and a solid electrolyte layer between the cathode layer and the anode layer, wherein
the cathode layer includes a cathode current collector and a cathode active material layer on at least one side (e.g., one or both (e.g., opposite) sides) of the cathode current collector,
the anode layer includes an anode current collector and a first anode active material layer on at least one side (e.g., one or both (e.g., opposite) sides) of the anode current collector, and
the first anode active material layer includes an anode active material capable of forming an alloy or compound with lithium, a fibrous carbon-based material, and a binder.

### BRIEF DESCRIPTION OF DRAWINGS

The accompanying drawing is included to provide a further understanding of the present disclosure, and is incorporated in and constitutes a part of this specification. The drawing illustrates example embodiments of the present disclosure and, together with the description, serve to explain principles of present disclosure. The above and other aspects, features, and advantages of certain embodiments of the present disclosure will be more apparent from the following description taken in conjunction with the accompanying drawings, in which:
FIG. 1 is a cross-sectional view of an all-solid-state secondary battery according to example embodiments;
FIG. 2 is a cross-sectional view of an all-solid-state secondary battery according to example embodiments;
FIG. 3 is a cross-sectional view of an all-solid-state secondary battery according to example embodiments;
FIG. 4 is a cross-sectional view of an all-solid-state secondary battery according to example embodiments;
FIG. 5 is a cross-sectional view of an all-solid-state secondary battery according to example embodiments;
FIG. 6 is a cross-sectional view of an all-solid-state secondary battery according to example embodiments;
FIG. 7 is a cross-sectional view of an all-solid-state secondary battery according to example embodiments;
FIG. 8 is a cross-sectional view of an all-solid-state secondary battery according to example embodiments;
FIG. 9 is a cross-sectional view of an all-solid-state secondary battery according to example embodiments;
FIG. 10 is a cross-sectional view of an all-solid-state secondary battery according to example embodiments;
FIG. 11 is a cross-sectional view of an all-solid-state secondary battery according to example embodiments; and
FIG. 12 is a cross-sectional view of an all-solid-state secondary battery according to example embodiments.

### DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described herein, by referring to the drawings, to explain aspects of the present description. As utilized herein, the term "and/or" includes any and all combinations of one or more of the associated listed items. As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

Unless otherwise defined, all terms (including technical and scientific terms) utilized in this disclosure have the same meaning as commonly understood by those skilled in the art to which this disclosure pertains. Additionally, terms as defined in commonly utilized dictionaries should be interpreted as having meanings consistent with their meanings within the context of the related art and present disclosure, and should not be interpreted in an idealized or overly formal sense.

Example embodiments are described herein with reference to cross-sectional views, which are schematic diagrams of idealized embodiments. As such, for example, variations from the illustrated shape depending from manufacturing techniques and/or tolerances should be expected. Accordingly, the embodiments described in this disclosure should not be construed as limited to the specific shapes of the regions as shown in this disclosure, but should include, for example, variations in shapes resulting from manufacturing. For example, areas shown or described as flat may typically have rough and/or non-linear features. Moreover, angles shown as sharp may be rounded. Accordingly, the areas shown in the drawings are schematic in nature and the shapes are not intended to depict the exact shape of the areas and are not intended to limit the scope of the claims.

The present disclosure can be embodied in many different forms, and should not be construed as limited to the implementation examples described in this disclosure. Embodiments are provided such that this disclosure will be thorough and complete, and will fully convey the scope of the present disclosure to those skilled in the art. Like reference numerals denote like elements.

It will be understood that if (e.g., when) an element is referred to as being "on" another element, it may be directly on top of the other element, or there may be other element(s) intervening between them. In contrast, if (e.g., when) an element is said to be "directly on" another element, there are no intervening elements between them.

Terms such as "first," "second," "third," and/or the like may be utilized in this disclosure to describe one or more suitable elements, components, regions, layers, and/or zones, and these elements, components, regions, layers, and/or zones should not be limited by these terms. These terms are utilized only to distinguish one element, component, area, layer, or zone from another element, component, area, layer, or zone. Accordingly, a first element, component, region, layer, or zone described herein may be referred to as a second element, component, region, layer, or zone without departing from the teachings of the present disclosure.

The terminology utilized in this disclosure is not intended to describe only specific implementation examples and does not limit the present disclosure. The singular forms utilized herein are intended to include the plural forms, including "at least one," unless the content (e.g., amount) clearly dictates otherwise. Further, the utilization of "may" when describing embodiments of the present disclosure refers to "one or more embodiments of the present disclosure". "At least one" should not be construed as limiting to the singular. The term "and/or" as utilized herein includes any and all combinations of one or more of the listed items. The terms "include" and/or "including" as utilized in the detailed description specify the presence of the specified feature, area, integer, step, operation, element, and/or component, and the presence or addition of one or more other features, area, integers, steps, operations, elements, and/or groups thereof is not excluded.

Spatially relative terms such as "below," "under," "lower portion," "on," "above," "upper portion," etc. are utilized to facilitate describing the relationship of one element or feature to another element or feature. It will be understood that spatially relative terms are intended to encompass different orientations of a device in utilize or operation in addition to the orientation shown in the drawings. For example, if (e.g., when) the device in the drawing were turned over, an element described as "below" or "under" another element or feature would be oriented "above" the other element or feature. Therefore, the example term "under" can encompass both (e.g., simultaneously) the above and under directions. The device may be positioned in different orientations (rotated 90 degrees or rotated in other directions) and the spatially relative terms utilized in this disclosure can be interpreted accordingly.

"Group" refers to a group of the Periodic Table of Elements according to the International Union of Pure and Applied Chemistry ("IUPAC") Groups 1-18 grouping system.

The "particle diameter" of a particle in this disclosure refers to an average diameter in the case where the particle is spherical, or an average major axis length in the case where the particle is non-spherical. Particle diameter can be measured utilizing a particle size analyzer (PSA). The "particle diameter" is, for example, an average particle diameter. The "average particle diameter" is, for example, D50, which is a median particle diameter.

D50 is the particle size corresponding to about 50 % of the cumulative volume calculated from the particle side with the smaller particle size in a particle size distribution measured by laser diffraction.

D90 is the particle size corresponding to about 90 % of the cumulative volume calculated from the particle side with the smaller particle size in a particle size distribution measured by laser diffraction.

D10 is the particle size corresponding to about 10 % of the cumulative volume calculated from the particle side with the smaller particle size in a particle size distribution measured by laser diffraction.

The term "metal" utilized herein includes both (e.g., simultaneously) metals and metalloids such as silicon and germanium, in an elemental or ionic state.

The term "alloy" utilized herein refers to a mixture of two or more metals.

The term "electrode active material" utilized herein refers to an electrode material capable of undergoing lithiation and delithiation.

The term "cathode active material" utilized herein refers to a cathode material capable of undergoing lithiation and delithiation.

The term "anode active material" utilized herein refers to an anode material capable of undergoing lithiation and delithiation.

The terms "lithiation" and "lithiate" utilized herein refer to a process of adding lithium to an electrode active material.

The terms "delithiation" and "delithiate" utilized herein refer to a process of removing lithium from an electrode active material.

The terms "charging" and "charge" utilized herein refer to a process of providing electrochemical energy to a battery.

The term "discharging" and "discharge" utilized herein refer to a process of removing electrochemical energy from a battery.

The term "cathode" utilized herein refer to an electrode in which electrochemical reduction and lithiation occur during a discharging process.

The term "anode" utilized herein refer to an electrode in which electrochemical oxidation and delithiation occurs during the discharge process.

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Although specific embodiments have been described, alternatives, modifications, variations, improvements, and substantial equivalents not currently contemplated or foreseen may occur to applicants or those skilled in the art. Accordingly, the appended claims, as filed and as modified, are intended to cover all such alternatives, modifications, variations, improvements and substantial equivalents.

Hereinafter, all-solid-state secondary batteries according to example embodiments will be described in more detail.

### All-solid-state secondary battery

An all-solid-state secondary battery according to embodiments includes a cathode layer, an anode layer, and a solid electrolyte layer between the cathode layer and the anode layer, wherein the cathode layer includes a cathode current collector and a cathode active material layer on at least one side (e.g., one or both (e.g., opposite) sides) the cathode current collector, the anode layer includes an anode current collector and a first anode active material layer on at least one side (e.g., one or both (e.g., opposite) sides) of the anode current collector, the first anode active material layer includes an anode active material capable of forming an alloy or compound with lithium, a fibrous carbon-based material, and a binder, the ratio (B/A) of the initial charge capacity (B) of the first anode active material layer to the initial charge capacity (A) of the cathode active material layer is about 0.01 to about 0.75, the initial charge capacity of the cathode active material layer is determined by charging from a 1^{st} open circuit voltage to a maximum charging voltage with respect to Li/Li⁺, and the initial charge capacity of the first anode active material layer is determined by charging from a 2^{nd} open circuit voltage to about 0.01 V with respect to Li/Li⁺.

The fibrous carbon-based material may provide a conducting path among a plurality of anode active materials. Accordingly, the increase in internal resistance of the first anode active material layer may be easily suppressed or reduced. The increase in internal resistance of the all-solid-state secondary battery may be suppressed or reduced.

The fibrous carbon-based material may act as a support/buffer among a plurality of anode active materials. Accordingly, the change in the volume of the first anode active material layer due to precipitation and/or dissolution of lithium during charging and discharging may be more easily alleviated. Therefore, the change in volume during charging and discharging of the all-solid-state secondary battery may be reduced.

The binder may bind the anode active material to the fibrous carbon-based material. Accordingly, the cut-off of the conducting path between the anode active material and the fibrous carbon-based material due to a change in the volume of the anode active material during the precipitation and/or dissolution of lithium during charging and discharging, may be suppressed or reduced more effectively. Non-uniformity in the electrode reaction of an all-solid-state secondary battery may be suppressed or reduced.

The binder may improve the binding force between the first anode active material layer and the solid electrolyte layer or between the first anode active material layer and the anode current collector. For example, the binder may improve the wettability between the first anode active material layer and the solid electrolyte layer or between the first anode active material layer and the anode current collector. Therefore, the binder may more effectively reduce the increase in interfacial resistance caused by the formation of voids between the first anode active material layer and the solid electrolyte layer or between the first anode active material layer and the anode current collector. The cycle characteristics of the all-solid-state secondary battery may be improved.

If (e.g., when) the first anode active material layer does not include a binder, the first anode active material layer is separated from the solid electrolyte layer and/or the anode current collector and thus, the surface of the solid electrolyte layer and/or anode current collector may be exposed. For example, an exposed anode current collector may cause a short circuit. The cycle characteristics of the all-solid-state secondary battery may be decreased.

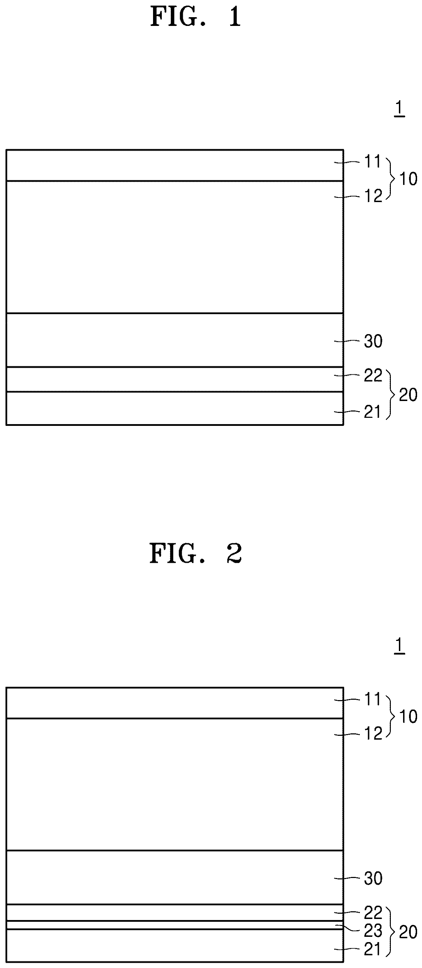

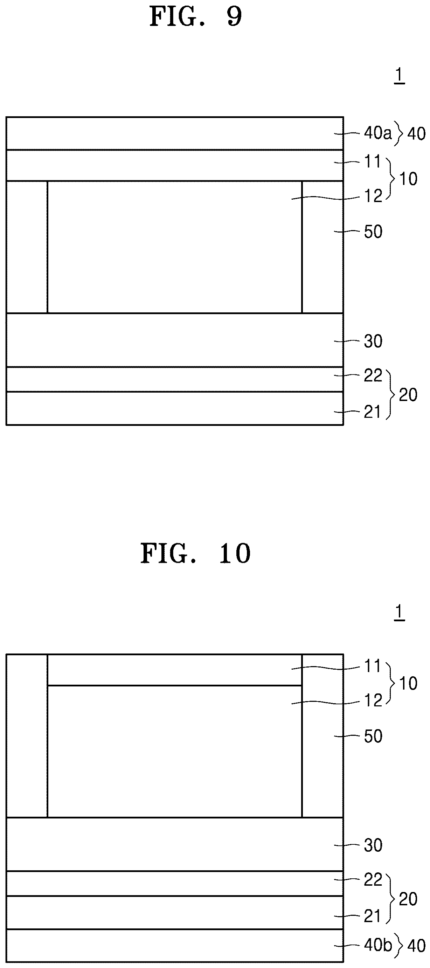

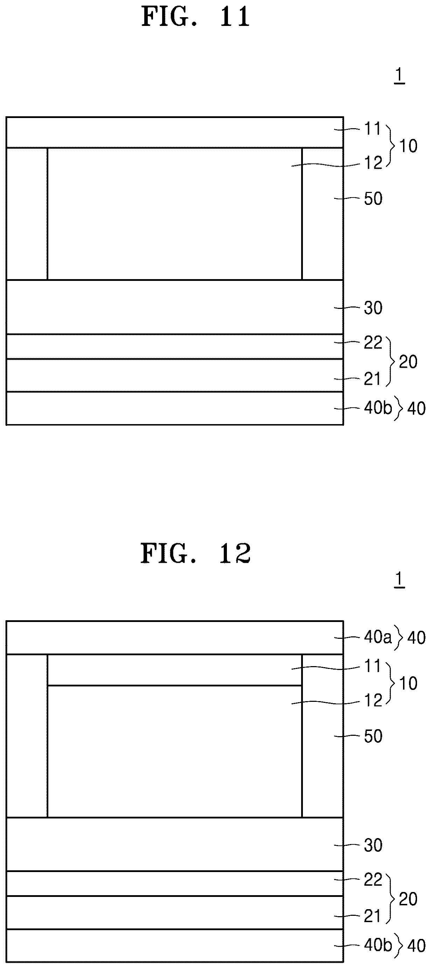

Referring to FIGS. 1 to 12, an all-solid-state secondary battery 1 includes a cathode layer 10, an anode layer 20, and a solid electrolyte layer 30 between the cathode layer 10 and the anode layer 20. The cathode layer 10 may include a cathode current collector 11 and a cathode active material layer 12 on at least one side (e.g., one or both (e.g., opposite) sides) of the cathode current collector 11. The anode layer 20 may include an anode current collector 21 and a first anode active material layer 22 on at least one side (e.g., one or both (e.g., opposite) sides) of the anode current collector 21. The first anode active material layer 22 may include an anode active material that is capable of form an alloy with lithium or a compound with lithium, a fibrous carbon-based material, and a binder. The ratio (B/A) of the initial charge capacity (B) of the first anode active material layer to the initial charge capacity (A) of the cathode active material layer may be about 0.01 to about 0.75. The initial charge capacity of the cathode active material layer may be determined by charging from a 1^{st} open circuit voltage to the maximum charging voltage with respect to Li/Li⁺. The initial charge capacity of the first anode active material layer is determined by charging from a 2^{nd} open circuit voltage to about 0.01 V with respect to Li/Li⁺.

### Anode layer

### Anode layer: anode active material

Referring to FIGS. 1 to 12, the anode layer 20 may include the first anode active material layer 22. The first anode active material layer 22 may include an anode active material capable of forming an alloy or compound with lithium.

The anode active material may be, for example, an anode material that is capable of forming an alloy with lithium or an anode material that is capable of forming a compound with lithium.

The first anode active material layer 22 may include the anode active material, and the anode active material may include, for example, a particle. The size of the anode active material in the particle form may be, for example, about 2 µm or less, about 1 µm or less, about 500 nm or less, about 300 nm or less, or about 100 nm or less. The size of the anode active material in the particle form may be, for example, about 10 nm to about 2 µm, about 100 nm to about 2 µm, about 200 nm to about 2 µm, about 500 nm to about 2 µm, or about 500 nm to about 1.5 µm. In some embodiments, the size of the anode active material in the particle form may be, for example, about 10 nm to about 2 µm, about 10 nm to about 1 µm, about 10 nm to about 500 nm, about 10 nm to about 300 nm, about 10 nm to about 200 nm, or about 10 nm to about 100 nm. Within these ranges of size, the anode active material may more easily perform reversible absorption and/or desorbing of lithium during charging and discharging. The size of the anode active material may be, for example, the average particle diameter of the anode active material. The average particle diameter of the anode active material may be, for example, the median diameter (D50) measured utilizing a laser particle size distribution meter.

The aspect ratio of the anode active material may be, for example, about 5 or less, about 4 or less, about 3 or less, or about 2 or less. The aspect ratio of the anode active material may be, for example, about 1 to about 5, about 1 to about 4, about 1 to about 3, or about 1 to about 2. Within these ranges of the aspect ratio, the anode active material may be more uniformly distributed in the first anode active material layer 22. As a result, non-uniformity in change in volume during charging and discharging of the anode active material may be suppressed or reduced. The aspect ratio of the anode active material may be measured utilizing, for example, a scanning electron microscope. The aspect ratio of the anode active material, e.g., a ratio of diameter and length of the anode active material may be determined from SEM images.

The anode active material included in the first anode active material layer 22 may include, for example, a metal-based anode active material.

Metal-based anode active materials include, for example, silicon (Si), gold (Au), platinum (Pt), palladium (Pd), silver (Ag), aluminum (Al), bismuth (Bi), tin (Sn), zinc (Zn), or a combination thereof, but is not necessarily limited thereto, and any metal-based anode active material that is capable of forming an alloy or compound with lithium in the art, may be applicable herein. For example, nickel (Ni) does not form an alloy with lithium, and accordingly, nickel (Ni) is not a metallic anode active material.

For example, the first anode active material layer 22 may not include (e.g., may exclude) a carbon-based anode active material. Due to the absence of a carbon-based anode active material in the first anode active material layer 22, the energy density of the first anode active material layer 22 may be further improved.

In some embodiments, the first anode active material layer 22 includes an anode active material, and the anode active material may be, for example, a composite anode active material. The composite anode active material may include, for example, a carbon-based support and a metal-based anode active material supported on the carbon-based support. A composite anode active material having this structure, may prevent or reduce localization of the metal-based anode active material in the first anode active material layer 22 and may provide substantially uniform distribution. As a result, the cycle characteristics of the all-solid-state secondary battery 1 including the first anode active material layer 22 may be further improved. Metal-based anode active materials supported on a carbon-based support may include, for example, silicon (Si), gold (Au), platinum (Pt), palladium (Pd), silver (Ag), aluminum (Al), bismuth (Bi), and tin. (Sn), tellurium (Te), and zinc (Zn). The carbon-based support may be, for example, amorphous carbon. Amorphous carbon may include, for example, carbon black, (CB), acetylene black (AB), furnace black (FB), ketjen black (KB), graphene, activated carbon, etc., but is not necessarily limited thereto, and any carbon that is classified as amorphous carbon in the relevant technical field may be applicable herein. Amorphous carbon is carbon that does not have crystallinity or has very low crystallinity, and is distinguished from crystalline carbon or graphite-based carbon. The composite anode active material may have a particle form, for example. The particle diameter of the composite anode active material having a particle shape may be, for example, about 10 nm to about 2 µm, about 10 nm to about 1 µm, about 10 nm to about 500 nm, about 10 nm to about 200 nm, or about 10 nm to about 100 nm. Within these ranges of particle diameter, reversible absorption and/or desorbing of lithium may be facilitated during charging and discharging. The metal-based anode active material supported on the support may have, for example, a particle form. The particle diameter of the metal-based anode active material may be, for example, about 1 nm to about 200 nm, about 1 nm to about 150 nm, about 5 nm to about 100 nm, or about 10 nm to about 50 nm. The carbon-based support may have, for example, a particle form. The particle diameter of the carbon-based support may be, for example, about 10 nm to about 2 µm, about 10 nm to about 1 µm, about 10 nm to about 500 nm, about 10 nm to about 200 nm, or about 10 nm to about 100 nm. Within these ranges of particle diameter, the carbon-based support may be more uniformly disposed in the first anode active material layer. The carbon-based support may be, for example, nanoparticles with a particle diameter of 500 nm or less. The particle size of the composite anode active material, the particle size of the metal-based anode active material, and the particle size of the carbon-based support may be, for example, an average particle size. The average particle diameter may be, for example, the median diameter (D50) measured utilizing a laser particle size distribution meter. In some embodiments, the average particle diameter may be determined, for example, automatically utilizing software from an electron microscope image, or manually.

### Anode layer: fibrous carbon-based material

The first anode active material layer 22 may include a fibrous carbon-based material in addition to the anode active material.

The first anode active material layer 22 may include a mixture including an anode active material capable of forming an alloy or compound with lithium and a fibrous carbon-based material. For example, the first anode active material layer 22 may include a mixture including a fibrous carbon-based material and one or more selected from among silicon (Si), gold (Au), platinum (Pt), palladium (Pd), silver (Ag), aluminum (Al), bismuth (Bi), tin (Sn), and zinc (Zn). The mixing ratio of the mixture of the fibrous carbon-based material and silicon, etc. may be, for example, about 99:1 to about 1:99, about 10:1 to about 1:10, about 1:1 to about 1:9, about 1:1 to about 1:8, about 1:1 to about 1:7, about 1:1 to about 1:6, about 1:1 to about 1:5, about 1:1 to about 1:4 or about 1:1 to about 1:3, but is not necessarily limited to these ranges, and may vary depending on required characteristics of the all-solid-state secondary battery 1. By utilizing these compositions of the fibrous carbon-based material and the anode active material, the cycle characteristics of the all-solid-state secondary battery 1 may be further improved.

The first anode active material layer 22 may include a mixture of first particles consisting of metal and second particles consisting of a fibrous carbon-based material. Metals may include, for example, silicon (Si), gold (Au), platinum (Pt), palladium (Pd), silver (Ag), aluminum (Al), bismuth (Bi), tin (Sn), zinc (Zn), or a combination thereof. The content (e.g., amount) of the second particles may be about 1 wt% to about 99 wt%, about 1 wt% to about 70 wt%, about 10 wt% to about 70 wt%, about 11 wt% to about 60 wt%, about 12 wt% to about 50 wt%, based on the total weight of the mixture. By utilizing the fibrous carbon-based material having these ranges of content (e.g., amount), the cycle characteristics of the all-solid-state secondary battery 1 may be further improved.

In some embodiments, the size of the anode active material that is capable of forming an alloy or compound with lithium may be smaller than the length of the fibrous carbon-based material. Due to the longer length of the fibrous carbon-based material than the size of the anode active material, the fibrous carbon-based material may act as a support and/or buffer among a plurality of anode active materials. The fibrous carbon-based material may be disposed among a plurality of anode active materials to effectively relieve stress caused by a change in the volume of the anode active material due to precipitation and/or dissolution of lithium during charging and discharging. As a result, the change in volume during charging and discharging of the first anode active material layer 22 may be more effectively suppressed or reduced. The ratio of the size of the anode active material and the length of the fibrous carbon-based material may be, for example, about 1:10 to about 1:2000, about 1:10 to about 1:1000, about 1:10 to about 1 :500, about 1:10 to about 1:200, about 1:10 to about 1:100, about 1:10 to about 1:50, or about 1:10 to about 1:20. Within these ranges of ratio of the size of the anode active material to the length of the fibrous carbon-based material, for example, the cycle characteristics of the all-solid-state secondary battery 1 may be further improved.

The fibrous carbon-based material may be, for example, a conductive carbon-based material. A fibrous carbon-based material having conductivity may provide a conductive path inside the first anode active material layer 22. The fibrous carbon-based material may more effectively reduce the internal resistance of the first anode active material layer 22. As a result, the cycle characteristics of the all-solid-state secondary battery 1 may be improved. The first anode active material layer 22 may not additionally include any other carbon-based conductive material other than the fibrous carbon-based material. Due to the absence of other carbon-based conductive materials than the fibrous carbon-based material in the first anode active material layer 22, the energy density of the first anode active material layer 22 may be further improved.

The aspect ratio of the fibrous carbon-based material may be, for example, about 10 or more, about 20 or more, about 30 or more, or about 50 or more. The aspect ratio of the fibrous carbon-based material may be, for example, about 2000 or less, about 1000 or less, about 500 or less, about 200 or less, or about 100 or less. The aspect ratio of the fibrous carbon-based material may be, for example, about 10 to about 2000, about 20 to about 2000, about 30 to about 2000, or about 50 to about 2000. The aspect ratio of the fibrous carbon-based material may be, for example, about 10 to about 2000, about 10 to about 1000, about 10 to about 500, about 10 to about 200, about 10 to about 100, about 10 to about 50, or about 10 to about 20. The aspect ratio of the fibrous carbon-based material may be, for example, the ratio of the length of the long axis of the fibrous carbon-based material, that is, the length of the fibrous carbon-based material, and the length of the minor axis normal or perpendicular to the long axis, that is, the diameter of a second carbon-based material. The "aspect ratio" used herein may refer to the average aspect ratio and may be determined from SEM images. Within these ranges of aspect ratio of the fibrous carbon-based material, the fibrous carbon-based material may be longer than the conducting path inside the first anode active material layer 22. The fibrous carbon-based material may form a three-dimensional conductive network within the first anode active material layer 22, thereby reducing the internal resistance of the first anode active material layer 22 more effectively. As a result, the internal resistance of the all-solid-state secondary battery 1 may be reduced. For example, the high rate characteristics of the all-solid-state secondary battery 1 may be improved.

The fibrous carbon-based material may include, for example, an amorphous fibrous carbon-based material, a crystalline fibrous carbon-based material, or a combination thereof. By including an amorphous fibrous carbon-based material in the fibrous carbon-based material, side reactions between lithium and the fibrous carbon-based material may be more effectively suppressed or reduced. The cycle characteristics of the all-solid-state secondary battery 1 may be improved by improving the reversibility of the electrode reaction during charging and discharging of the all-solid-state secondary battery 1.

The diameter of the fibrous carbon-based material may be, for example, about 50 nm or less, about 30 nm or less, about 20 nm or less, or about 10 nm or less. The diameter of the fibrous carbon-based material may be, for example, about 1 nm to about 50 nm, about 1 nm to about 30 nm, or about 1 nm to about 10 nm. A fibrous carbon-based material having these ranges of diameter may effectively reduce the internal resistance of the first anode active material layer 22, and may be easily dispersed in a solvent and/or slurry during manufacturing the first anode active material layer 22.

The length of the fibrous carbon-based material may be, for example, about 1000 µm or less, about 100 µm or less, about 50 µm or less, about 10 µm or less, about 5 µm or less, about 2 µm or less, about 1 µm or less, about 500 nm or less, or about 300 nm or less. The length of the fibrous carbon-based material may be, for example, about 100 nm to about 1,000 µm, about 100 nm to about 500 µm, about 100 nm to about 100 µm, about 100 nm to about 50 µm, about 100 nm to about 10 µm, about 100 nm to about 5 µm, about 100 nm to about 2 µm, about 100 nm to about 1 µm, about 100 nm to about 500 nm, or about 100 nm to about 300 nm. The length of the fibrous carbon-based material may be, for example, about 500 nm to about 1000 µm, about 500 nm to about 500 µm, about 500 nm to about 100 µm, about 500 nm to about 50 µm, about 500 nm to about 10 µm, about 1 µm to about 10 µm, or about 2 µm to about 8 µm. As the length of the fibrous carbon-based material is increased, the internal resistance of an electrode may be reduced. In the present disclosure, when material is spherical or circular, "diameter" indicates a circle diameter or an average circle diameter, and when the material is non-spherical or non-circular, the "diameter" indicates a major axis length or an average major axis length.

The fibrous carbon-based material may include, for example, fibrous carbon nanostructures. The fibrous carbon nanostructure may include, for example, carbon nanofibers, carbon nanotubes, carbon nanobelts, or a combination thereof.

Carbon nanotubes may include, for example, a carbon nanotube primary structure, a carbon nanotube secondary structure formed by agglomerating a plurality of carbon nanotube primary particles, or a combination thereof.

The carbon nanotube primary structure may be one carbon nanotube unit. The carbon nanotube unit has a graphite sheet that has the shape of a cylinder with a nano-sized diameter, and a sp² bond structure. Depending on the angle and structure at which the graphite surface is bent, the characteristics of a conductor or a semiconductor may be obtained. Depending on the number of bonds forming the wall, the carbon nanotube unit can be classified as a single-walled carbon nanotube (SWCNT), a double-walled carbon nanotube (DWCNT), and a multi-walled carbon nanotube (MWCNT), etc. The smaller the wall thickness of the carbon nanotube unit, the lower the resistance.

A carbon nanotube primary structure may include, for example, a single-walled carbon nanotube (SWCNT), a double-walled carbon nanotube (DWCNT), and a multi-walled carbon nanotube (MWCNT), or a combination thereof. The diameter of the carbon nanotube primary structure may be, for example, about 1 nm or more or about 2 nm or more. The diameter of the carbon nanotube primary structure may be, for example, about 20 nm or less or about 10 nm or less. The diameter of the carbon nanotube primary structure may be, for example, about 1 nm to about 20 nm, about 1 nm to about 15 nm, or about 1 nm to about 10 nm. The length of the carbon nanotube primary structure may be, for example, about 100 nm or more or about 200 nm or more. The length of the carbon nanotube primary structure may be, for example, about 2 µm or less, about 1 µm or less, about 500 nm or less, or about 300 nm or less. The length of the carbon nanotube primary structure may be, for example, about 100 nm to about 2 µm, about 100 nm to about 1 µm, about 100 nm to about 500 nm, about 100 nm to about 400 nm, about 100 nm to about 300 nm, or about 200 nm to about 300 nm. The diameter and length of the carbon nanotube primary structure may be measured utilizing a scanning electron microscopy (SEM) image or a transmission electron microscopy (TEM) image. In some embodiments, the diameter and/or length of the carbon nanotube primary structure may be measured by laser diffraction.

A carbon nanotube secondary structure may be a structure formed by completely or partially gathering carbon nanotube primary structures to form a bundle-type or kind or a rope-type or kind. The carbon nanotube secondary structure may include, for example, a bundle-type or kind carbon nanotube, a rope-type or kind carbon nanotube, or a combination thereof. The diameter of the carbon nanotube secondary structure may be, for example, about 2 nm or more or about 3 nm or more. The diameter of the carbon nanotube secondary structure may be, for example, about 50 nm or less, about 30 nm or less, about 20 nm or less, or about 10 nm or less. The diameter of the carbon nanotube secondary structure may be, for example, about 2 nm to about 50 nm, about 2 nm to about 30 nm, or about 2 nm to about 20 nm. The length of the carbon nanotube secondary structure may be, for example, about 500 nm or more, about 700 nm or more, about 1 µm or more, or about 10 µm or more. The length of the carbon nanotube secondary structure may be, for example, less than about 1000 µm, less than about 500 µm, or less than about 100 µm. The length of the carbon nanotube secondary structure may be, for example, about 500 nm to about 1000 µm, about 500 nm to about 500 µm, about 500 nm to about 200 µm, about 500 nm to about 100 µm, about 500 nm to about 50 µm, about 500 nm to about 10 µm, about 1 µm to about 10 µm, or about 2 µm to about 8 µm. The diameter and length of the carbon nanotube secondary structure may be measured utilizing a SEM image or an optical microscope image. In some embodiments, the diameter and/or length of the carbon nanotube secondary structure may be measured by laser diffraction.

In some embodiments, the carbon nanotube secondary structure may be converted into carbon nanotube primary structures by dispersing the same in a solvent, and then, utilized to manufacture the first anode active material layer 22.

### Anode layer: binder

The first anode active material layer 22 may include a binder in addition to the anode active material and the fibrous carbon-based material. The binder may be, for example, a polymer binder. The binder included in the first anode active material layer 22 may be, for example, a binder containing a polar functional group. In the binder containing a polar functional group, the polar functional group includes, for example, a carboxyl group, a hydroxyl group, an amide group, an aldehyde group, or a combination thereof. The polar functional group may be partially or entirely substituted with lithium. The polar functional group may include, for example, a lithium-substituted or unsubstituted carboxyl group, a lithium-substituted or unsubstituted hydroxyl group, a lithium-substituted or unsubstituted amide group, a lithium-substituted or unsubstituted aldehyde group, or a combination thereof. The binder may include, for example, polyacrylic acid, lithium-substituted polyacrylic acid, or a combination thereof. The degree of substitution of lithium in lithium-substituted polyacrylic acid may be, for example, about 0.1 to about 1.0. The degree of substitution of lithium may be the ratio of carboxyl groups substituted with lithium with respect to the carboxyl groups (-COOH) and lithium-substituted carboxyl groups (-COOLi) included in polyacrylic acid.

The polymer of the polymer binder may include, for example, polyacrylic acid represented by Formula 1: 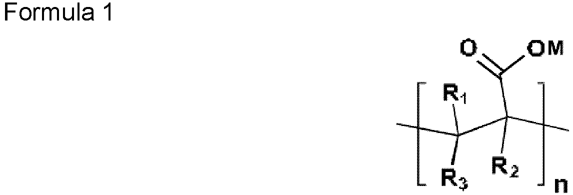 wherein
R₁, R₂, and R₃ may each independently hydrogen, halogen, a C1 to C10 alkyl group that is unsubstituted or substituted with halogen, a C2 to C10 alkenyl group that is unsubstituted or substituted with halogen, a C2 to C10 alkynyl group that is unsubstituted or substituted with halogen, a C5 to C10 cycloalkyl group that is unsubstituted or substituted with halogen, a C6 to C20 aryl group that is unsubstituted or substituted with halogen, or a C2 to C20 heteroaryl group that is unsubstituted or substituted with halogen, M is hydrogen or lithium, and n is the degree of polymerization and may be about 10 to about 10000. The weight average molecular weight of the polymer may be, for example, about 1,000 Dalton to about 250,000 Dalton or about 10,000 Dalton to about 200,000 Dalton. The weight average molecular weight of the polymer may be measured by, for example, gel permeation chromatography (GPC) utilizing a polystyrene standard sample.

Due to the inclusion of the lithium-substituted polar functional group in the binder, the ionic conductivity of the first anode active material layer 22 including the binder may be further improved. For example, the internal resistance of the first anode active material layer 22 including a binder containing a lithium-substituted polar functional group may be lower than the internal resistance of the first anode active material layer 22 including a binder that does not include the lithium-substituted polar functional group. As a result, the cycle characteristics of the all-solid-state secondary battery 1 including the first anode active material layer 22 including a binder containing a lithium-substituted polar functional group, may be improved.

The first anode active material layer 22 may additionally include another binder. The first anode active material layer 22 may additionally include another binder, and the other binder may be, for example, styrene-butadiene rubber (SBR), polytetrafluoroethylene, polyvinylidene fluoride, polyethylene, a polyvinylidene fluoride/hexafluoropropylene copolymer, polyacrylonitrile, polymethylmethacrylate, etc., but is not necessarily limited thereto, and any binder that is utilized as a binder in the art, may be applicable herein.

Due to the inclusion of the binder in the first anode active material layer 22, the first anode active material layer 22 is stabilized on the anode current collector 21. In some embodiments, cracking of the first anode active material layer 22 is suppressed or reduced despite change in volume and/or change in relative position of the first anode active material layer 22 during the charging and discharging process. For example, if (e.g., when) the first anode active material layer 22 does not include a binder, the first anode active material layer 22 may be easily separated from the anode current collector 21. At the portion of the anode current collector 21 which is exposed due to the separation of the first anode active material layer 22 from the anode current collector 21, the anode current collector 21 may contact the solid electrolyte layer 30, resulting in the higher likelihood of occurrence of a short circuit. The first anode active material layer 22 may be manufactured by, for example, applying a slurry in which materials, constituting the first anode active material layer 22, are dispersed onto the anode current collector 21 and drying the same. Due to the inclusion of a binder in the first anode active material layer 22, the anode active material and the fibrous carbon-based material may be stably dispersed in the slurry. For example, if (e.g., when) the slurry is applied onto the anode current collector 21 by screen printing, clogging of the screen (for example, clogging by aggregates of the anode active material) may be suppressed or reduced.

The binder content (e.g., amount) may be about 0.1 parts by weight to about 20 parts by weight, about 0.1 parts by weight to about 15 parts by weight, about 1 part by weight to about 10 parts by weight, or about 5 parts by weight to about 10 parts by weight, based on 100 parts by weight of the anode active material. Within these ranges of a binder content (e.g., amount), the cycle characteristics of the all-solid-state secondary battery 1 may be further improved.

### Anode layer: other additives

The first anode active material layer 22 may further include additives utilized in an all-solid-state secondary battery of the related art, and examples of such additives are fillers, coating agents, dispersants, and ion conductivity auxiliaries.

### Anode layer: first anode active material layer

The initial charge capacity (B) of the first anode active material layer 22 may be, for example, about 75 % or less, about 70 % or less, about 60 % or less, about 50 % or less, about 40 % or less, about 30 % or less, about 20 % or less, or about 10 % or less of the initial charge capacity (A) of the cathode active material layer 12.

The ratio (B/A) of the initial charge capacity (B) of the first anode active material layer 22 to the initial charge capacity (A) of the cathode active material layer 12 may be, for example, about 0.01 to about 0.75, about 0.01 to about 0.7, about 0.01 to about 0.6, about 0.01 to about 0.5, about 0.01 to about 0.6, about 0.01 to about 0.5, about 0.01 to about 0.4, about 0.01 to about 0.3, about 0.01 to about 0.2, or about 0.01 to about 0.1. The ratio (B/A) of the initial charge capacity (B) of the first anode active material layer 22 to the initial charge capacity (A) of the cathode active material layer 12 may be, for example, about 0.05 to about 0.75, about 0.1 to about 0.7, about 0.1 to about 0.6, about 0.2 to about 0.6, about 0.2 to about 0.5, or about 0.2 to about 0.45. The initial charge capacity of the cathode active material layer 12 may be determined by charging from a 1^{st} open circuit voltage to the maximum charging voltage with respect to Li/Li⁺. The initial charge capacity of the first anode active material layer 22 is determined by charging from a 2^{nd} open circuit voltage to about 0.01 V with respect to Li/Li⁺. The maximum charging voltage is determined depending on the type or kind of cathode active material. The maximum charging voltage may be, for example, about 1.5 V, about 2.0 V, about 2.5 V, about 3.0 V, about 3.5 V, about 4.0 V, about 4.2 V, or about 4.3 V. For example, the maximum charging voltage of Li₂S or Li₂S composite may be determined between about 2.5 V and about 3.0 V with respect to Li/Li⁺. For example, the maximum charging voltage of lithium transition metal oxide may be determined between about 3.0 V and about 4.5 V with respect to Li/Li⁺.

The initial charge capacity (mAh) of the cathode active material layer 12 may be obtained by multiplying the charge specific capacity (mAh/g) of the cathode active material by the mass (g) of the cathode active material in the cathode active material layer 12. If (e.g., when) several types (kinds) of cathode active materials are utilized, the equation of the charging capacity density × mass value is applied to each cathode active material, and the sum of these values is the initial charging capacity of the cathode active material layer 12. The initial charge capacity of the first anode active material layer 22 is also calculated in substantially the same manner. The initial charge capacity of the first anode active material layer 22 may be obtained by multiplying the charge specific capacity (mAh/g) of the anode active material by the mass of the anode active material in the first anode active material layer 22. If (e.g., when) several types (kinds) of anode active materials are utilized, the equation of the charging capacity density × mass value is applied to each anode active material, and the sum of these values is the initial charging capacity of the first anode active material layer 22. The charge specific capacity of each of the cathode active material and the anode active material may be measured utilizing an all-solid half-cell utilizing lithium metal as a counter electrode. The initial charge capacity of each of the cathode active material layer 12 and the first anode active material layer 22 may be directly measured utilizing an all-solid half-cell at a constant current density, for example, about 0.1 mA/cm². For the cathode, the measurements may be performed from the 1^{st} open circuit voltage (OCV) to the maximum charging voltage, for example, an operating voltage of about 3.0 V (vs. Li/Li⁺). For the anode, the measurements may be performed from the 2^{nd} open circuit voltage (OCV) to the operating voltage of about 0.01 V with respect to the anode, for example, lithium metal. For example, an all-solid half battery having a cathode active material layer may be charged with a constant current of about 0.1 mA/cm² from the 1^{st} open circuit voltage to about 3.0 V. An all-solid half battery having the first anode active material layer may be charged with a constant current of about 0.1 mA/cm² from the 2^{nd} open circuit voltage to about 0.01 V. The current density during constant current charging may be, for example, about 0.2 mA/cm², or 0.5 mA/cm². The all-solid-state half-cell having a cathode active material layer may be charged, for example, from the 1^{st} open circuit voltage to about 2.5 V, about 2.0 V, about 3.5 V, about 4.0 V, or about 4.5 V. The maximum charging voltage of the cathode active material layer may be determined by the maximum voltage of a battery that satisfies the safety conditions according to JISC8712:2015 of the Japanese Standards Association.

If (e.g., when) the initial charge capacity of the first anode active material layer 22 is too small, the thickness of the first anode active material layer 22 becomes very small, so that the lithium dendrite formed between the first anode active material layer 22 and the anode current collector 21 may collapse the first anode active material layer 22. In this case, it may be difficult to improve the cycle characteristics of the all-solid-state secondary battery 1. If (e.g., when) the charging capacity of the first anode active material layer 22 is increased excessively, the energy density of the all-solid-state secondary battery 1 may be decreased and the internal resistance of the all-solid-state secondary battery 1 due to the first anode active material layer 22 may be increased. Therefore, it may be difficult to improve the cycle characteristics of the all-solid-state secondary battery 1.

The thickness of the first anode active material layer 22 may be, for example, about 50 % or less, about 40 % or less, about 30 % or less, about 20 % or less, or about 10 % or less of the thickness of the cathode active material layer 12. The thickness of the first anode active material layer 22 may be, for example, about 1 % to about 50 %, about 1 % to about 40 %, about 1 % to about 30 %, about 1 % to about 20 %, or about 1 % to about 10 % of the thickness of cathode active material layer 12. The thickness of the first anode active material layer 22 may be, for example, about 1 µm to about 50 µm, about 2 µm to about 40 µm, about 3 µm to about 30 µm, about 4 µm to about 20 µm, or about 5 µm to about 20 µm. The thickness of the first anode active material layer 22 may be, for example, about 5 µm to about 50 µm, about 10 µm to about 50 µm, about 15 µm to about 50 µm, about 20 µm to about 50 µm, or about 25 µm to about 50 µm. If (e.g., when) the thickness of the first anode active material layer 22 is too small, the lithium dendrites formed between the first anode active material layer 22 and the anode current collector 21 may collapse the first anode active material layer 22. Accordingly, it may be difficult to improve the cycle characteristics of the all-solid-state secondary battery 1. If (e.g., when) the thickness of the first anode active material layer 22 increases excessively, the energy density of the all-solid-state secondary battery 1 may be decreased and the internal resistance of the all-solid-state secondary battery 1 due to the first anode active material layer 22 may be increased. Therefore, it may be difficult to improve the cycle characteristics of the all-solid-state secondary battery 1. If (e.g., when) the thickness of the first anode active material layer 22 is decreased, the initial charge capacity of the first anode active material layer 22 may also be decreased, for example.

### Anode: second anode active material layer

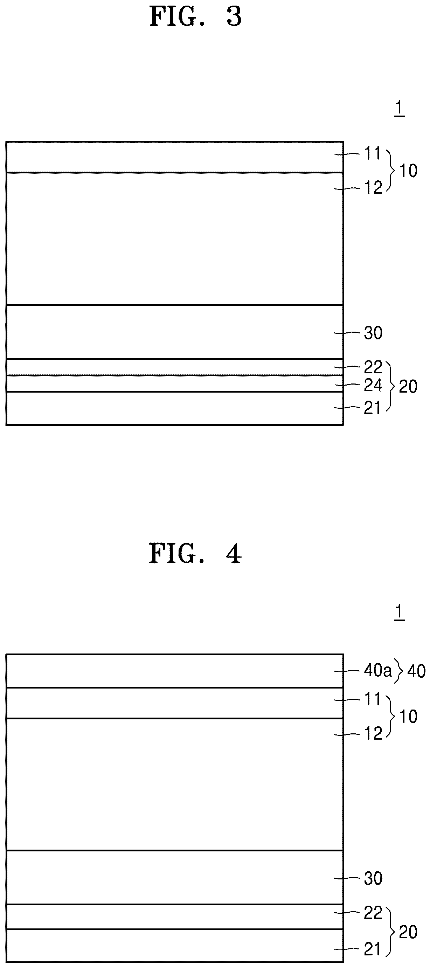

Referring to FIG. 3, after charging, the all-solid-state secondary battery 1 may further include, for example, a second anode active material layer 24 disposed between the anode current collector 21 and the first anode active material layer 22. The second anode active material layer 24 may be a metal layer containing lithium or lithium alloy. The metal layer may include lithium or a lithium alloy. Therefore, as the second anode active material layer 24 is a metal layer containing lithium, the second anode active material layer 24 may act as, for example, a lithium reservoir. Lithium alloys include, for example, Li-Al alloy, Li-Sn alloy, Li-In alloy, Li-Ag alloy, Li-Au alloy, Li-Zn alloy, Li-Ge alloy, Li-Si alloy, etc., and are not limited thereto, and any lithium alloy utilized in the relevant technical field may be applicable herein. The second anode active material layer 24 may include (e.g., consist of) one of these alloys or lithium, or may include (e.g., consist of) several types (kinds) of alloys. The second anode active material layer 24 may be, for example, a plated layer. For example, the second anode active material layer 24 may be plated between the first anode active material layer 22 and the anode current collector 21 during the charging process of the all-solid-state secondary battery 1.

The thickness of the second anode active material layer 24 is not limited, and may be, for example, about 1 µm to about 200 µm, about 1 µm to about 150 µm, about 1 µm to about 100 µm, about 1 µm to about 50 µm, about 1 µm to about 30 µm, about 1 µm to about 22 µm, or about 1 µm to about 10 µm. If (e.g., when) the thickness of the second anode active material layer 24 is too small, it is difficult for the second anode active material layer 24 to function as a lithium reservoir. If (e.g., when) the thickness of the second anode active material layer 24 is too great, the mass and volume of the all-solid-state secondary battery 1 may be increased and the cycle characteristics of the all-solid-state secondary battery 1 may actually deteriorate.

For example, the thickness of the second anode active material layer 24 may be smaller than the thickness of the first anode active material layer 22. The thickness of the second anode active material layer 24 may be, for example, about 70 % or less, about 60 % or less, about 50 % or less, about 40 % or less, or about 30 % or less of the thickness of the first anode active material layer 22. The thickness of the second anode active material layer 24 may be, for example, about 1 % to about 70 %, about 1 % to about 60 %, about 1 % to about 50 %, about 1 % to about 40 %, or about 1 % to about 30 % of the thickness of the first anode active material layer 22. As the thickness of the second anode active material layer 24 is smaller than the thickness of the first anode active material layer 22, the change in volume during charging and discharging of the all-solid-state secondary battery may be suppressed or reduced. As a result, due to the suppression of the change in volume of the all-solid-state secondary battery, deterioration may be suppressed or reduced.

In some embodiments, the second anode active material layer 24 of the all-solid-state secondary battery 1, may be disposed between the anode current collector 21 and the first anode active material layer 22 before the assembly of the all-solid-state secondary battery 1. If (e.g., when) the second anode active material layer 24 is disposed between the anode current collector 21 and the first anode active material layer 22 before the assembly of the all-solid-state secondary battery 1, the second anode active material layer 24 may act as a lithium reservoir because the second anode active material layer 24 is a metal layer including lithium. For example, before the assembly of the all-solid-state secondary battery 1, lithium foil may be placed between the anode current collector 21 and the first anode active material layer 22.

If (e.g., when) the second anode active material layer 24 is plated by charging after the assembly of the all-solid-state secondary battery 1, the energy density of the all-solid-state secondary battery 1 may be increased because the second anode active material layer 24 is not included during the assembly of the all-solid-state secondary battery 1. During charging the all-solid-state secondary battery 1, the charging capacity of the first anode active material layer 22 may be exceeded. For example, the first anode active material layer 22 may be overcharged. At the beginning of charging, lithium is adsorbed on the first anode active material layer 22. The anode active material included in the first anode active material layer 22 may form an alloy or compound with lithium ions that have migrated from the cathode 10. If (e.g., when) charging exceeds the capacity of the first anode active material layer 22, for example, lithium is plated on the rear surface of the first anode active material layer 22, that is, between the anode current collector 21 and the first anode active material layer 22, and a metal layer corresponding to the second anode active material layer 24 may be formed by the plated lithium. The second anode active material layer 24 may be a metal layer mainly consisting of lithium (i.e., metallic lithium). This result is obtained due to, for example, the inclusion of a material that forms an alloy or compound with lithium in the anode active material included in the first anode active material layer 22. During discharging, lithium in the first anode active material layer 22 and the second anode active material layer 24, that is, the metal layer, is ionized and moves toward the cathode 10. Therefore, lithium can be utilized as an anode active material in the all-solid-state secondary battery 1. In some embodiments, due to the covering, by the first anode active material layer 22, the second anode active material layer 24, the first anode active material layer 22 may act as a protective layer for the second anode active material layer 24, that is, the metal layer, and at the same time, may suppress or reduce precipitation growth of lithium dendrites. Therefore, the short circuit and capacity reduction of the all-solid-state secondary battery 1 are suppressed or reduced, and as a result, the cycle characteristics of the all-solid-state secondary battery 1 are improved. In some embodiments, if (e.g., when) the second anode active material layer 24 is disposed by charging after the assembly of the all-solid-state secondary battery 1, the anode 20, that is, the anode current collector 21 and the first anode active material layer 22 and an area therebetween may be lithium (Li)-free areas that do not contain lithium in the initial state or the post- complete discharging state of the all-solid-state secondary battery 1.

### Anode: anode current collector

The anode current collector 21 may include, for example, a material that does not react with lithium, that is, does not form any alloy or compound. Materials constituting the anode current collector 21 include, for example, copper (Cu), stainless steel, titanium (Ti), iron (Fe), cobalt (Co), and nickel (Ni), but are not necessarily limited thereto, and any that is utilized as an electrode current collector in the art may be applicable herein. The anode current collector 21 may include (e.g., consist of) one of the metals described above, or an alloy or coating material of two or more of the metals described above. The anode current collector 21 may be, for example, sheet-shaped or foil-shaped.

Referring to FIG. 2, the all-solid-state secondary battery 1 may further include a thin film 23 containing an element capable of forming an alloy with lithium on at least one side (e.g., one or both (e.g., opposite) sides) of the anode current collector 21. The thin film 23 may be disposed between the anode current collector 21 and the first anode active material layer 22. The thin film 23 may include, for example, an element that is capable of forming an alloy with lithium. Elements that are capable of forming an alloy with lithium include, for example, gold, silver, zinc, tin, indium, silicon, aluminum, and bismuth, but are not necessarily limited thereto, and any element that can form an alloy with lithium in the art, may be applicable herein. The thin film 23 may include (e.g., consist of) one of these metals or an alloy of several types (kinds) of metals thereof. Due to the placement of the thin film 23 on at least one side (e.g., one or both (e.g., opposite) sides) of the anode current collector 21, for example, the plated form of the second anode active material layer 24 to be plated between the thin film 23 and the first anode active material layer 22 may be more flat, and the cycle characteristics of the all-solid-state secondary battery 1 may be further improved.

The thickness of the thin film 23 may be, for example, about 1 nm to about 800 nm, about 10 nm to about 700 nm, about 50 nm to about 600 nm, or about 100 nm to about 500 nm. If (e.g., when) the thickness of the thin film 23 is less than 1 nm, it may be difficult for the thin film 23 to perform the function thereof. If (e.g., when) the thickness of the thin film 23 is too great, the thin film 23 itself may be configured to absorb lithium and thus the amount of lithium plated at the anode may be decreased, thereby lowering the energy density of the all-solid-state secondary battery 1 and reducing the cycle characteristics of the all-solid-state secondary battery 1. The thin film 23 may be disposed on the anode current collector 21 by, for example, a vacuum deposition method, a sputtering method, a plating method, etc., but the method of forming the coating layer is not necessarily limited to these methods, and any method capable of forming a thin film in the art may be utilized herein.

In some embodiments, the anode current collector 21 may include, for example, a base film and a metal layer disposed on at least one side (e.g., one or both (e.g., opposite) sides) of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. If (e.g., when) the base film includes an insulating thermoplastic polymer, if (e.g., when) a short circuit occurs, the base film softens or liquefies and blocks the battery operation, thereby suppressing a rapid increase in current. The metal layer may include, for example, copper (Cu), stainless steel, titanium (Ti), iron (Fe), cobalt (Co), nickel (Ni), or an alloy thereof. The anode current collector 21 may additionally include a metal chip and/or a lead tab. For more detailed information about the anode current collector 21, the metal layer, the metal chip, and the lead tab of the anode current collector 21, may be understood in connection with a cathode current collector. By having this structure, the anode current collector 21 may contribute to a decrease in the weight of the anode and consequently improve the energy density of an anode and a lithium battery.

### Anode layer: first inactive member

Referring to FIGS. 4 to 5 and 8 to 12, the all-solid-state secondary battery 1 may further include a first inactive member 40, 40a, or 40b disposed on one or more of another side of the anode current collector 21 and another side of the cathode current collector 11.

The first inactive member 40, 40a, or 40b may not include (e.g., may exclude) an electrode active material. The first inactive member 40, 40a, or 40b may be, for example, an insulating member.

The first inactive member 40, 40a, or 40b may have conductivity by additionally including a conductive material. The first inactive member 40, 40a, or 40b may be, for example, a flame retardant inactive member by additionally including a flame retardant material.

The first inactive member 40, 40a, or 40b may be, for example, an elastic member. The first inactive member 40, 40a, or 40b may be, for example, a porous elastic member. The first inactive member 40, 40a, or 40b may be, for example, an elastic member having one or more of porosity, conductivity, and flame retardancy.

The first inactive member 40, 40a, or 40b may provide a buffering function to the all-solid-state secondary battery 1. The first inactive member 40, 40a, or 40b may provide, for example, stress relaxation and restoring force. The first inactive member 40, 40a, or 40b may effectively tolerate change in volume of the all-solid-state secondary battery 1 and may apply a constant pressure to the all-solid-state secondary battery 1.

The first inactive member 40, 40a, or 40b may have, for example, a lower elastic modulus than the anode current collector 21. Due to a smaller elastic modulus of the first inactive member 40, 40a, or 40b than the anode current collector 21, change in the volume of the anode layer 20 during charging and discharging of all-solid-state secondary battery 1 may be more effectively tolerated. The first inactive member 40, 40a, or 40b may effectively reduce the internal stress caused by the change in volume of the all-solid-state secondary battery 1 during charging and discharging of the all-solid-state secondary battery 1, thereby improving the cycle characteristics of the all-solid-state secondary battery 1.

In some embodiments, the first inactive member 40, 40a, or 40b may be placed on the anode layer 20 of the all-solid-state secondary battery 1. If (e.g., when) the change in volume of the anode layer 20 is relatively large compared to the cathode layer 10 and the solid electrolyte layer 30 during charging and discharging of the all-solid-state secondary battery 1, due to the first inactive member 40, 40a, or 40b positioned adjacent to the anode layer 20, the change in the volume of the anode layer 20 may be more effectively tolerated. In some embodiments, the first inactive member 40, 40a, or 40b may induce substantially uniform plating of lithium metal in the anode layer 20 by applying a certain pressure to the anode layer 20. Therefore, the defects formed in the all-solid-state secondary battery 1 due to uneven plating of lithium metal, may be effectively prevented or reduced.

In some embodiments, the first inactive member 40, 40a, or 40b may be disposed on the cathode layer 10 of the all-solid-state secondary battery 1. By placing the first inactive member 40, 40a, or 40b to be adjacent to the cathode layer 10, change in the volume of the all-solid-state secondary battery 1 may be more effectively tolerated. In some embodiments, the first inactive member 40, 40a, or 40b applies a constant pressure to the all-solid-state secondary battery 1 to induce substantially uniform plating of lithium metal in the anode layer 20. Therefore, the defects formed in the all-solid-state secondary battery 1 due to uneven plating of lithium metal, may be effectively prevented or reduced.

The first inactive member 40, 40a, or 40b may include a polymer material, a rubber material, or a combination thereof. The first inactive member 40, 40a, or 40b may have stress relief and resilience by including a polymer material, a rubber material, or a combination thereof. The polymer material may include, for example, a polyurethane-based polymer, a polyacrylic polymer, a polystyrene-based polymer, a polyester-based polymer, a polyamide-based polymer, a polyolefin-based polymer, or a combination thereof. The polymer material may be, for example, a polymer resin. The polymer material may be, for example, an adhesive resin. The rubber material may include, for example, natural rubber (NR), butadiene rubber (BR), nitrile rubber, silicone rubber, isoprene rubber (IR), styrene-butadiene rubber (SBR), isoprene-butadiene rubber, styrene-isoprene-butadiene rubber, acrylonitrile-butadiene rubber (NBR), ethylene-propylene-diene rubber, halogenated butyl rubber, chloroprene (CR), halogenated isoprene rubber, halogenated isobutylene copolymer, chloroprene rubber, butyl rubber (IIR), halogenated isobutylene-p-methylstyrene rubber, or a combination thereof. The polyurethane-based polymer may include, for example, polyester-based polyurethane, polyether-based polyurethane, or a combination thereof. The polyacrylic polymer may include, for example, polyacrylate, methyl polyacrylate, polymethacrylate, polymethylmethacrylate, or a combination thereof. The polystyrene-based polymer may include, for example, a styrene-ethylene-butylene copolymer (SEB), a styrene-butadiene-styrene copolymer (SBS), a hydrogenated product of SBS (styrene-ethylene-butylene-styrene copolymer (SEBS)), a styrene-isoprene-styrene copolymer (SIS), a hydrogenated product of SIS (a styrene-ethylene-propylene-styrene copolymer (SEPS)), a styrene-isobutylene-styrene copolymer (SIBS), a styrene-butadiene-styrene-butadiene copolymer (SBSB), a styrene-butadiene-styrene-butadiene-styrene copolymer (SBSBS), polystyrene (PS), an acrylonitrile styrene copolymer (AS), an acrylonitrile butadiene styrene copolymer (ABS), or a combination thereof. The polyester-based polymer may include, for example, polyethylene terephthalate, polybutylene terephthalate, or a combination thereof. The polyamide-based polymer may include, for example, polyamide 6, polyamide 11, polyamide 12, polyamide 66, polyamide 610, or a combination thereof. The polyolefin polymer may include, for example, polyethylene, polypropylene, an ethylene propylene copolymer, a propylene-1-hexene copolymer, a propylene-4-methyl-1-pentene copolymer, a propylene-1-butene copolymer, an ethylene-1-hexene copolymer, an ethylene-4-methyl-pentene copolymer, an ethylene-1-butene copolymer, a 1-butene-1-hexene copolymer, a 1-butene-4-methyl-pentene copolymer, an ethylene methacrylic acid copolymer, an ethylene ethyl metacrylate copolymer, an ethylene methacrylate ethyl copolymer, an ethylene methacrylate butyl copolymer, an ethylene-methyl acrylate copolymer, an ethylene-ethyl acrylate copolymer, an ethylene-butylacrylate copolymer, a propylene-methacrylic acid copolymer, a propylene-methacrylate methyl copolymer, a propylene-methacrylate ethyl copolymer, a propylene- methacrylate butyl copolymer, a propylene-methyl acrylate copolymer, a propylene-ethyl acrylate copolymer, a propylene-butyl acrylate copolymer, an ethylene-vinyl acetate copolymer (EVA),a polyolefin of a propylene vinyl acetate copolymer, or a combination thereof.

The first inactive member 40, 40a, or 40b may include, for example, porous foam, porous sponge, or a combination thereof. The first inactive member 40, 40a, or 40b may include, for example, a porous foam sheet, a porous sponge sheet, or a combination thereof. Due to these configurations, the first inactive member 40, 40a, or 40b may provide porosity and buffering functions. Porous foams may include, for example, closed cells, open cells, or a combination thereof. Porous sponges may include, for example, closed cells, open cells, or a combination thereof. A closed cell refers to a cell or pore that is not connected to the around (e.g., surrounding) atmosphere, for example, a closed pore. An open cell refers to a cell or pore that is connected to the around (e.g., surrounding) atmosphere, for example, an open pore. The first inactive member 40, 40a, or 40b may include, for example, closed cell porous foam, open cell porous foam, closed cell porous sponge, open cell porous sponge, or a combination thereof. Porous foams may include, for example, both (e.g., simultaneously) closed and open cells. Porous sponges may include, for example, both (e.g., simultaneously) closed and open cells.

The first inactive member 40, 40a, or 40b may include, for example, a conductive material. The conductive material may be, for example, graphite, carbon black, acetylene black, Ketjen black, Denka black, carbon fiber, carbon nanotubes (CNT), graphene, metal fiber, metal powder, etc. The content (e.g., amount) of the conductive material included in the first inactive member 40, 40a, or 40b may be, for example, about 1 part by weight, about 1 part by weight to 30 parts by weight, about 1 part by weight to 20 parts, about 1 part by weight to 15 parts, about 1 part by weight to 10 parts, about 5 parts by weight to 40 parts, about 5 parts by weight to 30 parts, or about 5 parts by weight to 35 parts, based on 100 parts by weight of the first inactive member 40, 40a, or 40b. If (e.g., when) the first inactive member 40, 40a, or 40b has conductivity (e.g., is a conductor), the first inactive member 40, 40a, or 40b may function as an anode current collector.

The first inactive member 40, 40a, or 40b may include, for example, a matrix and a filler. The matrix may include, for example, a substrate and a reinforcement material. The matrix may include, for example, a fibrous substrate and a fibrous reinforcement material. By including a fibrous substrate, the matrix may have elasticity. The fibrous substrate may include, for example, one or more selected from pulp fibers, insulating polymer fibers, and ion conductive polymer fibers. Due to the inclusion of the reinforcement material, the matrix may have enhanced strength. A fibrous reinforcement material may include, for example, glass fiber, metal oxide fiber, and ceramic fiber. The fibrous reinforcement material may be, for example, a flame retardant material. Fillers may be, for example, moisture getters and/or flame retardants. The filler may be, for example, a metal hydroxide having moisture adsorption properties. Metal hydroxides contained in the filler may be, for example, Mg(OH)₂, Fe(OH)₃, Sb(OH)₃, Sn(OH)₄, TI(OH)₃, Zr(OH)₄, Al(OH)₃, or a combination thereof.

In some embodiments, the thickness of the first inactive member 40, 40a, or 40b may be greater than the thickness of the first anode active material layer 22. As the first inactive member 40, 40a, or 40b has a greater thickness than the first anode active material layer 22, the change in volume of anode layer 20 during charging and discharging may be more effectively tolerated. The thickness of the first anode active material layer 22 may be about 50 % or less, about 40 % or less, about 30 % or less, about 20 % or less, or about 10 % or less of the thickness of the first anode active material layer. The thickness of the first anode active material layer 22 may be, for example, about 1 % to about 50 %, about 1 % to about 40 %, about 1 % to about 30 %, about 1 % to about 20 %, or about 1 % to about 10 % of the thickness of the first inactive member 40, 40a, or 40b. The thickness of the first inactive member 40, 40a, or 40b may be, for example, about 10 µm to about 300 µm, about 20 µm to about 300 µm, about 50 µm to about 300 µm, or about 100 µm to about 200 µm. If (e.g., when) the thickness of the first inactive member 40, 40a, or 40b is too small, the intended effect may not be provided, and if (e.g., when) the thickness of the first inactive member 40, 40a, or 40b is too great, the energy density of the all-solid-state secondary battery 1 may be decreased. The shape of the first inactive member 40, 40a, or 40b is not limited and may be selected depending on the shape of the all-solid-state secondary battery 1. The first inactive member 40, 40a, or 40b may be, for example, includes a sheet, a rod, or a gasket. In some embodiments, the first inactive member 40, 40a, or 40b may not be provided.

### Cathode layer

### Cathode layer: cathode active material

Referring to FIGS. 1 to 12, the cathode active material layer 12 may include, for example, a cathode active material.

The cathode active material included in the cathode active material layer 12 may be a cathode active material that may reversibly absorb and desorb lithium ions. The cathode active material may include, for example, an oxide-based cathode active material, a sulfide-based cathode active material, or a combination thereof.

The oxide-based cathode active material may include, for example, lithium transition metal oxide, metal oxide, or a combination thereof. Lithium transition metal oxide may include, for example, lithium cobalt oxide, lithium nickel oxide, lithium nickel cobalt oxide, lithium nickel cobalt aluminum oxide, lithium nickel cobalt manganese oxide, lithium manganate, lithium iron phosphate, or a combination thereof. The metal oxide may include, for example, iron oxide, vanadium oxide, or a combination thereof.

A sulfide-based cathode active material may include, for example, nickel sulfide, copper sulfide, Li₂S, a Li₂S-containing composite, or a combination thereof.

An oxide-based cathode active material may be, for example, one or more types (kinds) of a composite oxide of lithium and a metal selected from among cobalt, manganese, nickel, and combinations thereof. A lithium-containing oxide based cathode active material may include, for example, a compound represented by one of: LiₐA_{1-b}B'_{b}D₂ (where 0.90 ≤ a ≤ 1, and 0 ≤ b ≤ 0.5); LiₐE_{1-b}B'_{b}O_{2-c}D_{c} (where 0.90 ≤ a ≤ 1, 0 ≤ b ≤ 0.5, and 0 ≤ c ≤ 0.05); LiE_{2-b}B'_{b}O₄-_{c}D_{c} (where 0 ≤ b ≤ 0.5 and 0 ≤ c ≤ 0.05); LiₐNi_{1-b-c}Co_{b}B'_{c}D_{α} (where 0.90 ≤ a ≤ 1, 0 ≤ b ≤ 0.5, 0 ≤ c ≤ 0.05, and 0 < α ≤ 2); LiₐNi_{1-b-c}Co_{b}B'_{c}O_{2-α}F'_{α} (where 0.90 ≤ a ≤ 1, 0 ≤ b ≤ 0.5, 0 ≤ c ≤ 0.05, and 0 < α < 2); LiₐNi_{1-b-c}Co_{b}B'_{c}O₂₋αF'_{α} (where 0.90 ≤ a ≤ 1, 0 ≤ b ≤ 0.5, 0 ≤ c ≤ 0.05, and 0 < α < 2); LiₐNi_{1-b-c}Mn_{b}B'_{c}D_{α} (where 0.90 ≤ a ≤ 1, 0 ≤ b ≤ 0.5, 0 ≤ c ≤ 0.05, and 0 < α ≤ 2); LiₐNi_{1-b-c}Mn_{b}B'_{c}O_{2-α}F'_{α} (where 0.90 ≤ a ≤ 1, 0 ≤ b ≤ 0.5, 0 ≤ c ≤ 0.05, and 0 < α < 2); LiₐNi_{1-b-c}Mn_{b}B'_{c}O_{2-α}F'_{α} (where 0.90 ≤ a ≤ 1, 0 ≤ b ≤ 0.5, 0 ≤ c ≤ 0.05, and 0 < α < 2); LiₐNi_{b}E_{c}G_{d}O₂ (where 0.90 ≤ a≤ 1, 0 ≤ b ≤ 0.9, 0 ≤ c ≤ 0.5, and 0.001 ≤ d ≤ 0.1); LiₐNi_{b}Co_{c}Mn_{d}GeO₂ (where 0.90 ≤ a ≤ 1, 0 ≤ b ≤ 0.9, 0 ≤ c ≤ 0.5, 0 ≤ d ≤0.5, and 0.001 ≤ e ≤ 0.1); LiₐNiG_{b}O₂ (where 0.90 ≤ a ≤ 1 and 0.001 ≤ b ≤ 0.1); LiₐCoG_{b}O₂ (where 0.90 ≤ a ≤ 1 and 0.001 ≤ b ≤ 0.1); LiₐMnG_{b}O₂ (where 0.90 ≤ a ≤ 1 and 0.001 ≤ b ≤ 0.1); LiₐMn₂G_{b}O₄ (where 0.90 ≤ a ≤ 1 and 0.001 ≤ b ≤ 0.1); LiV₂O₅; LiI'O₂; LiNiVO₄; Li_{(3-f)}J₂(PO₄)₃(0 ≤ f ≤ 2); Li_{(3-f)}Fe₂(PO₄)₃(0 ≤ f ≤ 2); and LiFePO₄.

In the formulae representing these compounds, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof. A compound in which a coating layer is provided on the surface of these compound may be utilized, and a mixture of these compounds and the compounds provided with the coating layer may also be utilized. The coating layer provided on the surface of these compounds may include a coating element compound such as oxide of a coating element, hydroxide of a coating element, oxyhydroxide of a coating element, oxycarbonate of a coating element, or hydroxycarbonate of a coating element. The compound constituting the coating layer may be amorphous or crystalline. The coating element included in the coating layer may be Mg, Al, Co, K, Na, Ca, Si, Ti, V, Sn, Ge, Ga, B, As, Zr, or a mixture thereof. A method of forming the coating layer may be selected within a range that does not adversely affect the physical properties of the cathode active material. The coating method may be, for example, spray coating, dipping method, and/or the like. A detailed description of the coating method will not be provided because it may be well understood by those in the art.

The oxide-based cathode active material may include, for example, lithium transition metal oxides represented by Formulae 1 to 8:

**Formula 1** **LiₐNiₓCo_{y}M_{z}O_{2-b}A_{b}**

wherein, in Formula 1,
1,0≤a≤1.2, 0≤b≤0.2, 0.8≤x<1, 0≤y≤0.3, 0<z≤0.3, and x+y+z=1,
M may be manganese (Mn), niobium (Nb), vanadium (V), magnesium (Mg), gallium (Ga), silicon (Si), tungsten (W), molybdenum (Mo), iron (Fe), chromium (Cr)), copper (Cu), zinc (Zn), titanium (Ti), aluminum (Al), boron (B), or a combination thereof, and
A may be F, S, Cl, Br, or a combination thereof,

   **Formula 2** **LiNiₓCo_{y}Mn_{z}O₂,**

   **Formula 3** **LiNiₓCo_{y}Al_{z}O₂,**
wherein, in Formulae 2 to 3, 0.8≤x≤0.95, 0≤y≤0.2, 0 <z≤0.2, and x+y+z=1,

   **Formula 4** **LiNiₓCo_{y}Mn_{z}Al_{w}O₂**
wherein, in Formula 4, 0.8≤x≤0.95, 0≤y≤0.2, 0 <z≤0.2, 0<w≤0.2, and x+y+z+w=1,

   **Formula 5** **LiₐCoₓM_{y}O_{2-b}A_{b}**
wherein, in Formula 5,
1.0≤a≤1.2, 0≤b≤0.2, 0.9≤x≤1, 0≤y≤0.1, and x+y=1,
M may be manganese (Mn), niobium (Nb), vanadium (V), magnesium (Mg), gallium (Ga), silicon (Si), tungsten (W), molybdenum (Mo), iron (Fe), chromium (Cr)), copper (Cu), zinc (Zn), titanium (Ti), aluminum (Al), boron (B), or a combination thereof, and
A may be F, S, Cl, Br, or a combination thereof,

   **Formula 6** **LiₐNiₓMn_{y}M'_{z}O_{2-b}A_{b}**
wherein, in Formula 6,
1.0≤a≤1.2, 0≤b≤0.2, 0 <x≤0.3, 0.5≤y<1, 0<z≤0.3, and x+y+z=1,
M' is cobalt (Co), niobium (Nb), vanadium (V), magnesium (Mg), gallium (Ga), silicon (Si), tungsten (W), molybdenum (Mo), iron (Fe), chromium (Cr)), copper (Cu), zinc (Zn), titanium (Ti), aluminum (Al), boron (B), or a combination thereof, and
A may be F, S, Cl, Br, or a combination thereof,

   **Formula 7** **LiₐM1ₓM2_{y}PO_{4-b}X_{b}**
wherein, in Formula 7, 0.90≤a≤1.1, 0≤x≤0.9, 0≤y≤0.5, 0.9 <x+y<1.1, and 0≤b≤2 ,
M1 may be chromium (Cr), manganese (Mn), iron (Fe), cobalt (Co), nickel (Ni), copper (Cu), zirconium (Zr), or a combination thereof, and
M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X may be O, F, S, P or a combination thereof.

   **Formula 8** **LiₐM3_{z}PO₄**
wherein, in Formula 8, 0.90≤a≤and 0.9≤z≤1.1, and
M3 may be chromium (Cr), manganese (Mn), iron (Fe), cobalt (Co), nickel (Ni), copper (Cu), zirconium (Zr), or a combination thereof.

The oxide-based cathode active material may be covered by a coating layer. The coating layer may be any coating layer suitable as a coating layer for a cathode active material for an all-solid-state secondary battery. The coating layer may be, for example, Li₂O-ZrO₂ (LZO).

The size of the oxide-based cathode active material may be, for example, about 0.1 µm to about 30 µm, about 0.5 µm to about 20 µm, or about 1 µm to about 15 µm. The oxide-based cathode active material may be, for example, single crystal particles or polycrystal particles.

Sulfide-based cathode active materials may include, for example, a Li₂S-containing composite. A Li₂S-containing composite may include, for example, a composite of Li₂S and carbon, a composite of Li₂S, carbon, and a solid electrolyte, a composite of Li₂S and a solid electrolyte, a composite of Li₂S and a lithium salt, a composite of Li₂S, a lithium salt, and carbon, and a composite of Li₂S and metal carbide, a composite of Li₂S, carbon, and metal carbide, a composite of Li₂S and metal nitride, a composite of Li₂S, carbon, and metal nitride, or a combination thereof.

A composite of Li₂S and carbon may include carbon. Carbon may be, for example, a material containing carbon atoms and may be any material that is utilized as a conductive material in the art. Carbon may be, for example, crystalline carbon, amorphous carbon, or a combination thereof. Carbon may be, for example, a calcined product of a carbon precursor. Carbon may be, for example, a carbon nanostructure. The carbon nanostructure may be, for example, a one-dimensional carbon nanostructure, a two-dimensional carbon nanostructure, a three-dimensional carbon nanostructure, or a combination thereof. Carbon nanostructures may include, for example, carbon nanotubes, carbon nanofibers, carbon nanobelts, carbon nanorods, graphene, graphene oxide (GO), reduced graphene oxide (rGO), graphene balls (GB), or a combination thereof. The carbon may be, for example, porous carbon or nonporous carbon. Porous carbon may include, for example, periodic and ordered two-dimensional or three-dimensional pores. Porous carbon may include, for example, carbon black such as Ketjen black, acetylene black, Denka black, thermal black, and channel black; graphite, activated carbon, or a combination thereof. The form of carbon may be, for example, a particle form, a sheet form, a fibrous form, etc., but is not limited thereto, and any carbon that is utilized in the art can be applicable herein. The manufacturing method of the composite of Li₂S and carbon may be a dry method, a wet method, or a combination thereof, but is not limited thereto. In the technical field, the manufacturing method of the composite of Li₂S and carbon may be, for example milling, heat treatment, deposition, etc., but is not limited thereto, and may be any method that is utilized in the art.

The composite of Li₂S, carbon, and a solid electrolyte may include carbon and a solid electrolyte. Carbon may be understood by referring to the description provided in connection with the composite of Li₂S and carbon described above. The solid electrolyte may be, for example, an amorphous solid electrolyte that can be utilized as an ion conductive material in the art. The solid electrolyte may be, for example, an inorganic solid electrolyte. A solid electrolyte may be, for example a crystalline solid electrolyte, an amorphous solid electrolyte, or a combination thereof. The solid electrolyte may be, for example, a sulfide-based solid electrolyte, an oxide-based solid electrolyte, or a combination thereof. A sulfide-based solid electrolyte includes, for example, Li, S, and P, and may optionally further include a halogen element. A sulfide-based solid electrolyte may be selected from sulfide-based solid electrolytes utilized in the solid electrolyte layer. For example, a sulfide-based solid electrolyte may have an ionic conductivity of about 1×10⁻⁵ S/cm or more at room temperature. A sulfide-based solid electrolyte may include, for example, at least one selected from among Li₃PO₄-Li₂SO₄, Li₂S-P₂S₅, Li₂S-P₂S₅-LiX, where X may be a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ where m and n may be positive numbers, and Z may be one of Ge, Zn, or Ga, Li₂S-GeS₂, Li₂S-SiS₂-Li₃PO₄, Li₂S-SiS₂-LiₚMO_{q} where p and q may be positive numbers and M may be one of P, Si, Ge, B, Al, Ga, and In, Li₇₋ₓPS₆₋ₓClₓ where 0≤x≤2, Li₇₋ₓPS₆₋ₓBrₓ where 0≤x≤2, and Li₇₋ₓPS₆₋ₓIₓ where 0≤x≤2. An oxide-based solid electrolyte may include, for example, Li, O, and transition metal elements, and may optionally further include other elements. For example, the oxide-based solid electrolyte may be a solid electrolyte having an ionic conductivity of about 1×10⁻⁵ S/cm or more at room temperature. An oxide-based solid electrolyte may be selected from among oxide-based solid electrolytes utilized in the solid electrolyte layer. The solid electrolyte may be, for example, a mixture of a sulfide-based solid electrolyte and a lithium salt. For example, it may be a mixture of Li₃PO₄-Li₂SO₄ and a binary lithium salt or a mixture of Li₃PO₄-Li₂SO₄ and a ternary lithium salt.

The composite of Li₂S and solid electrolyte may include a solid electrolyte. The solid electrolyte may be understood by referring to the description provided in connection with the composite of Li₂S, carbon, and a solid electrolyte.

The composite of Li₂S and lithium salt may include a lithium salt compound. A lithium salt compound does not include, for example, a sulfur (S) atom. A lithium salt compound may be, for example, a binary compound including (e.g., consisting of) lithium and one type or kind of element selected from among Group 13 to Group 17 of the Periodic Table of Elements. Binary compounds may include, for example, one or more selected from among LiF, LiCl, LiBr, Lil, LiH, Li₂S, Li₂O, Li₂Se, Li₂Te, LisN, LisP, LisAs, Li₃Sb, LiI₃, and LiB_{3.} A lithium salt compound may be, for example, a ternary compound consisting of lithium and two types (kinds) of elements selected from Group 13 to Group 17 of the Periodic Table of Elements. The ternary compound may include, for example, one or more selected from among Li₃OCl, LiPF₆, LiBF₄, LiSbF₆, LiAsF₆, LiClO₄, LiAlO₂, LiAlCl₄, LiNOs, Li₂CO₃, LiBH₄, Li₂SO₄, Li₃BO₃, Li₃PO₄, Li₄NCl, Li₅NCl₂, and Li₃BN₂. The lithium salt compound may be one or more lithium halide compounds selected from LiF, LiCl, LiBr, and Lil. The composite of Li₂S and solid electrolyte may include a solid electrolyte. The solid electrolyte may be understood by referring to the description provided in connection with the solid electrolyte utilized in the composite of Li₂S, carbon, and a solid electrolyte. A composite of Li₂S and a solid electrolyte may include, for example, a composite of Li₂S and one or more lithium salts selected from among LiF, LiCl, LiBr, Lil, LiH, Li₂S, Li₂O, Li₂Se, Li₂Te, Li₃N, LisP, LisAs, LisSb, Lil₃, and LiBs

The composite of Li₂S, lithium salt, and carbon may include a lithium salt compound and carbon. Carbon may be understood by referring to the description provided in connection with the composite of Li₂S and carbon described above.

The composite of Li₂S and metal carbide may include metal carbide. Metal carbide may be, for example, a two-dimensional metal carbide. A two-dimensional metal carbide may be, for example, MXene. Two-dimensional metal carbides may be, for example, Mₙ₊₁CₙTₓ (M is a transition metal, T is a terminal group, T is O, OH and/or F, n=1, 2, or 3, and x indicates the number of terminal groups). Two-dimensional metal carbides may be, for example, Ti₂CTₓ, (Ti_{0.5}, Nb_{0.5})₂CTₓ, Nb₂CTₓ, V₂CTₓ, Ti₃C₂Tₓ, (V_{0.5}, Cr_{0.5})₃C₂Tₓ, Ti₃CNTₓ, Ta₄C₃Tₓ, Nb₄C₃Tₓ, or a combination thereof. The surfaces of two-dimensional metal carbides may be terminated with O, OH and/or F.

The composite of Li₂S, carbon, and metal carbide may include carbon and metal carbide. Carbon may be understood by referring to the description provided in connection with the composite of Li₂S and carbon described above. Metal carbide may be understood by referring to the description provided in connection with the composite of Li₂S and metal carbide described previously.

The composite of Li₂S and metal nitride may include metal nitride. Metal nitride may be, for example, a two-dimensional metal nitride. Two-dimensional metal nitrides may be, for example, Mₙ₊₁NₙTₓ (M is a transition metal, T is a terminal group, T is O, OH and/or F, n=1, 2, or 3, and x indicates the number of terminal groups). The surfaces of two-dimensional metal nitrides may be terminated with O, OH and/or F.

The composite of Li₂S, carbon, and metal nitride may include carbon and metal nitride. Carbon may be understood by referring to the description provided in connection with the composite of Li₂S and carbon described above. Metal carbide may be understood by referring to the description provided in connection with the composite of Li₂S and metal nitride described above.

The Li₂S-containing composite may further include, for example, a second fibrous sulfide-based solid electrolyte. The Li₂S-containing composite may be a composite of Li₂S and a second fibrous sulfide-based solid electrolyte, or a composite of Li₂S, a second fibrous sulfide-based solid electrolyte, the above-described carbon, solid electrolyte, lithium salt, metal carbide, or metal nitride.

By further including the second fibrous sulfide-based solid electrolyte in the Li₂S-containing composite, deterioration of the lithium battery may be further suppressed or reduced and the cycle characteristics of the lithium battery may be further improved. The size of the second fibrous sulfide-based solid electrolyte may be smaller than the size of a first fibrous sulfide-based solid electrolyte. The length and/or thickness of the second fibrous sulfide-based solid electrolyte may respectively be about 50 % or less, about 40 % or less, about 30 % or less, about 20 % or less, or about 10 % or less of the length and/or thickness of the first fibrous sulfide-based solid electrolyte 100. The length and/or thickness of the second fibrous sulfide-based solid electrolyte may respectively be about 0.1 % to about 50 %, about 0.5 % to about 40 %, about 1 % to about 30 %, about 1 % to about 20 %, or about 1 % to about 10 % of the length and/or thickness of the first fibrous sulfide-based solid electrolyte 100. For example, the second fibrous sulfide-based solid electrolyte may have the same shape as and a smaller size than the first fibrous sulfide-based solid electrolyte 100. In some embodiments, the second fibrous sulfide-based solid electrolyte may have a reduced length and/or thickness, and in this case, may be easily distributed within the Li₂S-containing composite. If (e.g., when) the second fibrous sulfide-based solid electrolyte has such a reduced length and/or thickness, deterioration of the lithium battery may be further suppressed or reduced and the cycle characteristics of the lithium battery may be further improved.

The size of the sulfide-based cathode active material may be, for example, about 0.1 µm to about 50 µm, about 0.5 µm to about 30 µm, about 0.5 µm to about 20 µm, or about 1 µm to about 10 µm. The size of Li₂S may be, for example, about 1 nm to about 10 µm, about 10 nm to about 5 µm, about 10 nm to about 3 µm, or about 10 nm to about 1 µm. The size of the Li₂S-containing composite may be, for example, about 0.1 µm to about 50 µm, about 0.5 µm to about 30 µm, about 0.5 µm to about 20 µm, or about 1 µm to about 10 µm.

The shape of the cathode active material may be, for example, a particle shape such as spherical shape, ellipsoidal shape, etc. The particle diameter of the cathode active material is not limited and is within the range applicable to the cathode active material of an all-solid-state secondary battery of the related art. The content (e.g., amount) of the cathode active material in the cathode layer 10 is not limited and is within the range applicable to the cathode layer of an all-solid-state secondary battery of the related art. The content (e.g., amount) of the cathode active material included in the cathode active material layer 12 may be, for example, about 10 wt% to about 99 wt%, about 10 wt% to about 90 wt%, about 10 wt% to about 80 wt%, about 10 wt% to about 70 wt%, or about 10 wt% to about 50 wt%.

### Cathode layer: solid electrolyte

The cathode active material layer 12 may further include, for example, a solid electrolyte. The solid electrolyte may be, for example, a sulfide-based solid electrolyte. The solid electrolyte included in the cathode layer 10 may be the same as or different from the solid electrolyte included in the solid electrolyte layer 30. The solid electrolyte may be understood by referring to the description provided in connection with the solid electrolyte layer 30.

The solid electrolyte included in the cathode active material layer 12 may have a D50 average particle diameter smaller than that of the solid electrolyte included in the solid electrolyte layer 30. For example, the D50 average particle diameter of the solid electrolyte included in cathode active material layer 12 may be about 90 % or less, about 80 % or less, about 70 % or less, about 60 % or less, about 50 % or less, about 40 % or less, about 30 % or less, or about 20 % or less of the D50 average particle diameter of the solid electrolyte included in the solid electrolyte layer 30. The D50 average particle diameter may be, for example, a median particle diameter (D50). D50 corresponds to the size of a particle corresponding to about 50 % cumulative volume, calculated from the smaller particle size in a particle size distribution measured by, for example, laser diffraction.

The content (e.g., amount) of the solid electrolyte included in the cathode active material layer 12 may be, for example, about 1 wt% to about 40 wt%, about 1 wt% to about 30 wt%, about 1 wt% to about 20 wt%, or about 1 wt% to about 10 wt% of the total weight of the cathode active material layer 12.

### Cathode layer: conductive material

The cathode active material layer 12 may further include a conductive material. The conductive material may be, for example, a carbon-based conductive material, a metal-based conductive material, or a combination thereof. The carbon-based conductive material may be, for example, graphite, carbon black, acetylene black, Ketjen black, carbon fiber, or a combination thereof, but is not limited thereto, and may be any carbon-based conductive material that is utilized in the art. A metal-based conductive material may be metal powder, metal fiber, or a combination thereof, but is not limited thereto, and may be any material that is utilized as a metal-based conductive material in the art. The content (e.g., amount) of the conductive material included in the cathode active material layer 12 may be, for example, about 1 wt% to about 30 wt%, about 1 wt% to about 20 wt%, or about 1 wt% to about 10 wt% of the total weight of the cathode active material layer 12.

### Cathode layer: binder

The cathode active material layer 12 may further include a binder. The binder may be, for example, styrene butadiene rubber (SBR), polytetrafluoroethylene, polyvinylidene fluoride, polyethylene, etc., but is not limited thereto, and may be any material that is utilized as a binder in the art. The content (e.g., amount) of the binder included in the cathode active material layer 12 may be, for example, about 1 wt% to about 10 wt% of the total weight of the cathode active material layer 12. The binder may not be provided.

### Cathode layer: Other additives

In addition to the cathode active material, the solid electrolyte, the binder, and the conductive material described previously, the cathode active material layer 12 may further include additives, for example, a filler, a coating agent, a dispersant, and an ion conductivity auxiliary agent.

Here, one or more of the above referenced fillers, coating agents, dispersants, ion conductive auxiliaries, etc. which can be included in the cathode active material layer 12, may also be any one or more suitable materials that are generally utilized in electrodes for all-solid-state secondary batteries.

### Dry cathode: cathode current collector

The cathode current collector 11 may be, for example, a plate or foil including (e.g., consisting of) indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or alloys thereof. The cathode current collector 11 may not be provided. The thickness of the cathode current collector 11 may be, for example, about 1 µm to about 100 µm, about 1 µm to about 50 µm, about 5 µm to about 25 µm, or about 10 µm to about 20 µm.

The cathode current collector 11 may include, for example, a base film and a metal layer disposed on at least one side (e.g., one or both (e.g., opposite) sides) of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. In some embodiments, the base film may be an insulator. If (e.g., when) the base film includes an insulating thermoplastic polymer, if (e.g., when) a short circuit occurs, the base film softens or liquefies and blocks the battery operation, thereby suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or alloys or conjugates thereof. The metal layer may act as an electrochemical fuse and is cut in case of overcurrent to perform a short circuit prevention function. The limiting current and the maximum current may be adjusted by adjusting the thickness of the metal layer. The metal layer may be plated or deposited on the base film. As the thickness of the metal layer is decreased, the limiting current and/or maximum current of the cathode current collector 11 is decreased, resulting in an increase in the stability of the lithium battery in the event of a short circuit. For external connection, a lead tab may be added on the metal layer. The lead tab may be welded to the metal layer or the metal layer/base film laminate by ultrasonic welding, laser welding, spot welding, and/or the like. During welding, the base film and/or metal layer may melt and the metal layer may be electrically connected to the lead tab. To make welding between the metal layer and the lead tab more robust, a metal chip may be added between the metal layer and the lead tab. The metal chip may be a chip of the same material as the metal of the metal layer. The metal chip may be, for example, a metal foil or a metal mesh. The metal chip may be, for example, an aluminum foil, a copper foil, or a stainless steel (SUS) foil. By positioning the metal chip on the metal layer and welding the same to the lead tab, the lead tab may be welded to the metal chip/metal layer laminate or the metal chip/metal layer/base film laminate. During welding, the metal layer or the metal layer/metal chip laminate may be electrically connected to the lead tab while the base film, the metal layer, and/or the metal chip are melted. A metal chip and/or lead tab may be added onto a portion of the metal layer. The thickness of the base film may be, for example, about 1 µm to about 50 µm, about 1.5 µm to about 50 µm, about 1.5 µm to about 40 µm, or about 1 µm to about 30 µm. If (e.g., when) the base film has these ranges of thickness, the weight of the electrode assembly may be more effectively reduced. The melting point of the base film may be, for example, about 100 °C to about 300 °C, about 100 °C to about 250 °C, or about 100 °C to about 200 °C. If (e.g., when) the base film has these ranges of a melting point, the base film may be melted and easily coupled to the lead tab in the process of welding the lead tab. Surface treatment such as corona treatment may be performed on the base film in order to improve adhesion between the base film and the metal layer. The thickness of the metal layer may be, for example, about 0.01 µm to about 3 µm, about 0.1 µm to about 3 µm, about 0.1 µm to about 2 µm, or about 0.1 µm to about 1 µm. If (e.g., when) the metal layer has these ranges of thickness, stability of the electrode assembly may be ensured while conductivity is maintained. The thickness of the metal chip may be, for example, about 2 µm to about 10 µm, about 2 µm to about 7 µm, or about 4 µm to about 6 µm. If (e.g., when) the metal chip has these ranges of thickness, connection between the metal layer and the lead tab may be more easily performed. A cathode current collector 11 having this structure may contribute to a decrease in the weight of the cathode and ultimately, an increase in the energy density of the cathode and the all-solid-state secondary battery.

### Cathode layer: first inactive member

Referring to FIGS. 4 to 5 and 8 to 12, the all-solid-state secondary battery 1 may further include a first inactive member 40, 40a, or 40b disposed on at least one side (e.g., one or both (e.g., opposite) sides) of the anode current collector 21 and another side of the cathode current collector 11.

The first inactive member 40, 40a, or 40b may be understood by referring to the description provided in connection with the first inactive member 40, 40a, or 40b of the anode layer.

### Cathode layer: second inactive member

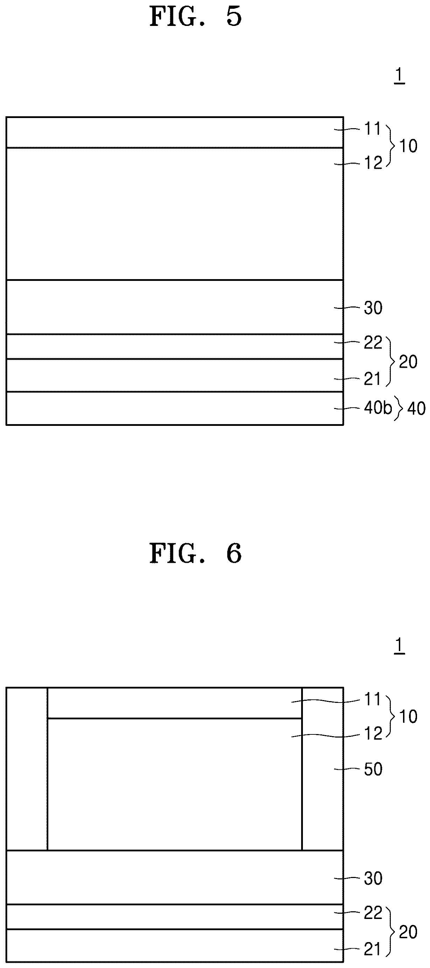

Referring to FIGS. 6 to 12, the cathode layer 10 includes the cathode current collector 11 and the cathode active material layer 12 disposed on at least one side (e.g., one or both (e.g., opposite) sides) of the cathode current collector 11. A second inactive member 50 may be disposed on at least one side (e.g., one or both (e.g., opposite) sides) of the anode layer 10.

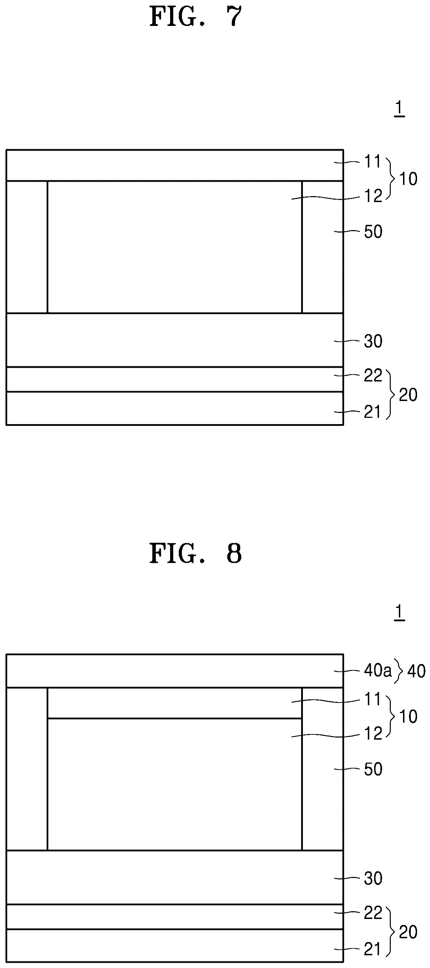

Referring to FIGS. 7, 9, and 11, the second inactive member 50 may be disposed on at least one side (e.g., one or both (e.g., opposite) sides) of the cathode active material layer 12 and between the solid electrolyte layer 30 and the cathode current collector 11 opposing the solid electrolyte layer 30. The second inactive member 50 may not be placed on one side surface of the cathode current collector 11. Referring to FIGS. 6, 8, 10, and 12, the second inactive member 50 may be disposed on at least one side surface (e.g., one or both (e.g., opposite) side surface) of each of the cathode active material layer 12 and the cathode current collector 11. By including the second inactive member 50, cracking of the solid electrolyte layer 30 may be prevented or reduced during manufacturing and/or charging and discharging of the all-solid-state secondary battery 1, resulting in the improvement of the all-solid-state secondary battery 1. In the all-solid-state secondary battery 1 that does not include the second inactive member 50, uneven pressure is applied onto the solid electrolyte layer 30 in contact with the cathode layer 10 during manufacturing and/or charging and discharging of the all-solid-state secondary battery 1, and thus, cracks may occur in the solid electrolyte layer 30, and the growth of lithium metal through the cracks may increase the possibility of a short circuit.

Referring to FIGS. 6 to 12, regarding the all-solid-state secondary battery 1, the thickness of the second inactive member 50 may be greater than the thickness of the first anode active material layer 22. For example, the thickness of the second inactive member 50 may be greater than the thickness of the solid electrolyte layer 30.

Referring to FIGS. 6 to 12, the second inactive member 50 may surround the side of the cathode layer 10 and may be in contact with the solid electrolyte layer 30. In some embodiments, the second inactive member 50 surrounds the side surfaces of the cathode layer 10 and contacts the solid electrolyte layer 30, and in this case, cracks in a portion of the solid electrolyte layer 30 that is not in contact with the cathode layer 10, which may be caused by pressure differences during pressing, may be effectively suppressed or reduced. The second inactive member 50 may surround the side surfaces of the cathode layer 10 and may be separated from the anode layer 20, for example, the first anode active material layer 22. The second inactive member 50 may surround the side surfaces of the cathode layer 10 and contact the solid electrolyte layer 30, and may be separated from the anode layer 20. In this regard, the possibility of a short circuit occurring due to physical contact between the cathode layer 10 and the first anode active material layer 22 or overcharging of lithium is suppressed or reduced. In some embodiments, the second inactive member 50 is disposed on side surfaces of the cathode active material layer 12 and the cathode current collector 11 at the same time (e.g., simultaneously), and in this case, the possibility of short circuit due to contact between the cathode current collector 11 and the anode layer 20 may be more effectively suppressed or reduced.

Referring to 6 to 12, the second inactive member 50 extends from one side surface of the cathode layer 10 to an end portion of the solid electrolyte layer 30. By extending the second inactive member 50 to the end portion of the solid electrolyte layer 30, cracking occurring at the end portion of the solid electrolyte layer 30 may be suppressed or reduced. The end portion of the solid electrolyte layer 30 refers to the outermost portion in contact with the side surface of the solid electrolyte layer 30. The second inactive member 50 may extend to the outermost portion in contact with the side surface of the solid electrolyte layer 30. The second inactive member 50 may be separated from the anode layer 20, for example, the first anode active material layer 22. The second inactive member 50 may extend to the end portion of the solid electrolyte layer 30, but does not contact the anode layer 20. In some embodiments, the second inactive member 50 may fill the space extending from one side surface of the cathode layer 10 to the end portion of the solid electrolyte layer 30.

The area of the cathode active material layer 12 or the cathode layer 10 may be smaller than the area of the first anode active material layer 22 or the anode layer 20. The area of the cathode active material layer 12 or the cathode layer 10 may be smaller than the area of the solid electrolyte layer 30.

The second inactive member 50 may be, for example, a gasket. In some embodiments, a gasket is utilized as the second inactive member 50, and in this case, cracking of the solid electrolyte layer 30 caused by pressure difference during the pressing process may be effectively suppressed or reduced.

The second inactive member 50 may have, for example, a single-layer structure. In some embodiments, the second inactive member 50 may have a multilayer structure. The multilayer structure may have, for example, a two-layer, three-layer, or four-layer structure, and by having a multilayer structure, the physical properties of the second inactive member 50 may be more precisely controlled or selected.

In some embodiments, part or all of the second inactive member 50 may be arranged to be spaced apart from the side surface of the cathode active material layer 12. By arranging part or all of the second inactive member 50 to be spaced apart from the side surfaces of the cathode active material layer 12, the manufacturing process of the all-solid-state secondary battery 1 becomes easier and the manufacturing speed of the all-solid-state secondary battery 1 may be increased. By arranging part or all of the second inactive member 50 to be spaced apart from the side of the cathode active material layer 12, the change in volume in the side direction of the cathode active material layer 12 during charging and discharging is more effectively tolerated, thereby further improving lifespan characteristics of the all-solid-state secondary battery 1. The distance between the second inactive member 50 and the side surface of the cathode active material layer 12 may be, for example, about 0.1 µm to about 10 mm, about 1 µm to about 1 mm, about 1 µm to about 500 µm, about 1 µm to about 100 µm, about 1 µm to about 50 µm, or about 1 µm to about 10 µm.

Referring to FIGS. 1 to 12, in some embodiments, the second inactive member 50 may be selected from among materials utilized in the first inactive member 40, 40a, or 40b described previously. The second inactive member 50 may not include (e.g., may exclude), for example, an electrode active material. The second inactive member 50 may be, for example, a flame retardant inactive member, an electron-insulating inactive member, an ion-insulating inactive member, or an elastic inactive member.

### Solid electrolyte layer

### Solid electrolyte layer: solid electrolyte

Referring to FIGS. 1 to 12, the all-solid-state secondary battery 1 may include the solid electrolyte layer 30 disposed between the anode layer 10 and the cathode layer 20. The solid electrolyte layer 30 may include, for example, a solid electrolyte or a combination of a solid electrolyte and a gel electrolyte.

The solid electrolyte may include, for example, a sulfide-based solid electrolyte, an oxide-based solid electrolyte, a polymer solid electrolyte, or a combination thereof.

The solid electrolyte may be, for example, a sulfide-based solid electrolyte. A sulfide-based solid electrolyte may include, for example, at least one selected from among Li₂S-P₂S₅, Li₂S-P₂S₅-LiX, where X may be a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCI, Li₂S-SiS₂-B₂S₃-LiI, Li₂S-SiS₂-P₂S₅-LiI, Li₂S-B₂S₃, Li₂S-P₂S₅-ZₘSₙ where m and n may be positive numbers, and Z may be one of Ge, Zn, or Ga, Li₂S-GeS₂, Li₂S-SiS₂-Li₃PO₄, Li₂S-SiS₂-LiₚMO_{q} where p and q may be positive numbers and M may be one of P, Si, Ge, B, Al, Ga, and In, Li₇₋ₓPS₆₋ₓClₓ where 0≤x≤2, Li₇₋ₓPS₆₋ₓBrₓ where 0≤x≤2, and Li₇₋ₓPS₆₋ₓIₓ where 0≤x≤2. Sulfide-based solid electrolytes are produced by treating starting materials such as Li₂S and P₂S₅ by melting quenching or mechanical milling. In some embodiments, after this treatment, heat treatment may be performed. The solid electrolyte may be amorphous, crystalline, or a mixture thereof. In some embodiments, the solid electrolyte may include, for example, sulfur (S), phosphorus (P), and lithium (Li) as constituent elements of at least those selected from among the sulfide-based solid electrolyte materials described previously. For example, the solid electrolyte may be a material containing Li₂S-P₂S₅. In some embodiment, a material containing Li₂S-P₂S₅ may be utilized as a sulfide-based solid electrolyte which constitutes a solid electrolyte, and in this case, the mixing molar ratio of Li₂S and P₂S₅ may be, for example, Li₂S : P₂S₅ = about 20:80 to about 90:10, about 25:75 to about 90:10, about 30:70 to about 70:30, and about 40:60 to about 60:40.

The sulfide-based solid electrolyte may include, for example, an argyrodite type or kind solid electrolyte (e.g., an argyrodite solid electrolyte) represented by Formula 1:

**Formula 1** **Li⁺₁₂₋ₙ₋ₓAⁿ⁺X²⁻₆₋ₓY⁻ₓ**

where A may be P, As, Ge, Ga, Sb, Si, Sn, Al, In, Ti, V, Nb, or Ta, X may be S, Se, or Te, and Y may be Cl, Br, I, F, CN, OCN, SCN, or N₃, 1≤n≤5, and 0≤x≤2. The sulfide-based solid electrolyte may be, for example, an argyrodite-type or kind (e.g., argyrodite) compound including one or more selected from among Li₇₋ₓPS₆₋ₓClₓ, 0≤x≤2, Li₇₋ₓPS₆₋ₓBrₓ, 0≤x≤2, and Li₇₋ₓPS₆₋ₓIₓ where x satisfies the condition of 0≤x≤2. The sulfide-based solid electrolyte may be, for example, an argyrodite-type or kind (e.g., argyrodite) compound containing one or more selected from among Li₆PS₅Cl, Li₆PS₅Br, and Li₆PS₅I.

Argyrodite-type or kind (e.g., argyrodite) solid electrolyte may have a density of about 1.5 g/cc to about 2.0 g/cc. In some embodiments, argyrodite-type or kind (e.g., argyrodite) solid electrolyte may have a density of about 1.5 g/cc or more, and in this case, the internal resistance of the all-solid-state secondary battery may be reduced, and the penetration of the solid electrolyte layer by Li may be effectively suppressed or reduced.

Oxide-based solid electrolyte may be, for example, Li_{1+x+y}AlₓTi₂₋ₓSi_{y}P_{3-y}O₁₂ (0<x<2, 0≤y<3), BaTiOs, Pb(Zr,Ti)O₃(PZT), Pb₁₋ₓLaₓZr_{1-y} Ti_{y}O₃(PLZT)(0≤x<1, 0≤y<1), PB(Mg₃Nb_{2/3})O₃-PbTiO₃(PMN-PT), HfO₂, SrTiOs, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃(0<x<2, 0<y<3), LiₓAl_{y}Ti_{z}(PO₄)₃ (0<x<2 and 0<y<1, 0<z<3), Li_{1+x+y}(Al, Ga)ₓ(Ti, Ge)₂₋ₓSi_{y}P_{3-y}O₁₂(0≤x≤1 and 0≤y≤1), LiₓLa_{y}TiO₃ (0<x<2, 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂(M = Te, Nb, or Zr, and 0≤x≤10), or a combination thereof. Oxide-based solid electrolytes are manufactured by, for example, a sintering method.

Oxide-based solid electrolytes may be, for example, a garnet-type or kind solid electrolyte (e.g., a garnet solid electrolyte) selected from among Li₇La₃Zr₂O₁₂(LLZO) and Li₃₊ₓLa₃Zr₂₋ₐMₐO₁₂(M doped LLZO, M=Ga, W, Nb, Ta, or Al, 0<a<2, and 0≤x≤10).

In some embodiments, the polymer solid electrolyte may include a mixture of a lithium salt and a polymer, or a polymer having an ion conductive functional group. The polymer solid electrolyte may be, for example, a polymer electrolyte that is in a solid state at about 25 °C and about 1 atm. The polymer solid electrolyte may not contain liquid, for example. The polymer solid electrolyte may include a polymer, and the polymer may be, for example, polyethylene oxide (PEO), polyvinylidene fluoride (PVDF), vinylidene fluoride-hexafluoropropylene (PVDF-HFP), polyethylene oxide (PEO), and a poly(styrene-b-ethylene oxide) block or reduce copolymer (PS-PEO), poly(styrene-butadiene), poly(styrene-isoprene-styrene), a poly(styrene-b-divinylbenzene) block or reduce copolymer, a poly(styrene-ethyleneoxide-styrene) block or reduce copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ketone) (SPEEK), sulfonated poly(arylene ether ketone ketone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate, DPASLi⁺), or a combination thereof, but is not limited thereto, and any material that is utilized as a polymer electrolyte in the art may be utilized herein. Any lithium salt that can be utilized as a lithium salt in the art, may be applicable herein. The lithium salt may be, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (where x and y are each from 1 to 20), LiCl, Lil, or a mixture thereof. The polymer included in the polymer solid electrolyte may be, for example, a compound containing about 10 or more, about 20 or more, about 50 or more, or about 100 or more repeating units. The weight average molecular weight of the polymer contained in the polymer solid electrolyte may be, for example, about 1000 Dalton or more, about 10,000 Dalton or more, about 100,000 Dalton or more, or about 1,000,000 Dalton or more.

A gel electrolyte may be, for example, a polymer gel electrolyte. In some embodiments, a gel electrolyte may be in a gel state without containing polymers.

In some embodiments, the polymer gel electrolyte may include a liquid electrolyte and a polymer, or may include an organic solvent and a polymer having an ion-conducting functional group. The polymer gel electrolyte may be, for example, a polymer electrolyte that is in a gel state at about 25 °C and about 1 atm. In some embodiments, a polymer gel electrolyte may have a gel state without liquid therein. Liquid electrolytes utilized in polymer gel electrolytes may be, for example, a mixture including an ionic liquid, a lithium salt, and an organic solvent; a mixture including a lithium salt and an organic solvent; a mixture including an ionic liquid and an organic solvents; or a mixture including a lithium salt, ionic liquid, and an organic solvent. The polymer utilized in the polymer gel electrolyte may be selected from among polymers utilized in solid polymer electrolytes. The organic solvent may be selected from among organic solvents utilized for liquid electrolytes. The organic solvent may be, for example, propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N, N-dimethylformamide, dimethylacetamide, dimethylsulfoxide, dioxane, 1,2-dimethoxyethane, sulfolane, dichloroethane, chlorobenzene, nitrobenzene, diethylene glycol, dimethylether, or a mixture thereof. The lithium salt may be selected from among lithium salts utilized in polymer solid electrolytes. The ionic liquid refers to a salt in a liquid state at room temperature or a room-temperature molten salt that has a melting point of room temperature or lower and consists only of ions. In some embodiments, the ionic liquid may be at least one selected from among compounds including: a) at least one cation selected from among ammonium, pyrrolidinium, pyridinium, pyrimidinium, imidazolium, piperidinium, pyrazolium, oxazolium, pyridazinium, phosphonium, sulfonium, triazolium, and a mixture thereof, and b) at least one anion selected from among BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻. In some embodiments, a polymer solid electrolyte may be impregnated with a liquid electrolyte in a secondary battery to form a polymer gel electrolyte. The polymer gel electrolyte may further include inorganic particles. The polymer included in the polymer gel electrolyte may be, for example, a compound containing about 10 or more, about 20 or more, about 50 or more, or about 100 or more repeating units. The weight average molecular weight of the polymer contained in the polymer gel electrolyte may be, for example, about 500 Dalton or more, about 1000 Dalton or more, about 10,000 Dalton or more, about 100,000 Dalton or more, or about 1,000,000 Dalton or more.

### Solid electrolyte layer: binder

The solid electrolyte layer 30 may include, for example, a binder. The binder included in the solid electrolyte layer 30 may be, for example, styrene-butadiene rubber (SBR), polytetrafluoroethylene, polyvinylidene fluoride, polyethylene, etc., but is not limited to these. The binder may be any material that can be utilized as a binder in the relevant technical field. The binder of the solid electrolyte layer 30 may be the same as or different from the binder included in each of the cathode active material layer 12 and the anode active material layer 22. The binder may not be provided.

The content (e.g., amount) of the binder included in the solid electrolyte layer 30 may be about 0.1 wt% to about 10 wt%, about 0.1 wt% to about 5 wt%, about 0.1 wt% to about 3 wt%, about 0.1 wt% to about 1 wt%, about 0 wt% to about 0.5 wt%, or about 0 wt% to about 0.1 wt%, based on the total weight of the solid electrolyte layer 30.

In this specification, substituents are derived by exchanging one or more hydrogen atoms with other atoms or functional groups in an unsubstituted parent group. Unless otherwise stated, the case where a functional group is considered as being "substituted" refers to a case where the functional group is substituted with one or more substituents selected from among a C1 to C40 alkyl group, a C2 to C40 alkenyl group, a C2 to C40 alkynyl group, a C3 to C40 cycloalkyl group, a C3 to C40 cycloalkenyl group, and a C7 to C40 aryl group. The case where a functional group is "optionally substituted" refers to a case where the functional group may be substituted with the substituents described above.

a and b in the expression "Ca to Cb" utilized herein refer to the number of carbon atom of a specific functional group. For example, the functional group may include carbon atoms in the number of a to the number of b. For example, "a C1 to C4 alkyl group" refers to an alkyl group having 1 to 4 carbon atoms, for example, CH₃-, CH₃CH₂-, CH₃CH₂CH₂-, (CH₃)₂CH-, CH₃CH₂CH₂CH₂-, CH₃CH₂CH(CH₃)- and (CH₃)₃C-.

The nomenclature for a particular radical may include either a mono-radical or a di-radical, depending on the context. For example, if (e.g., when) a substituent requires two linking sites to the rest of the molecule, the substituent should be understood as a diradical. For example, a substituent specified by an alkyl group requiring two linking sites includes diradicals such as -CH₂-, -CH₂CH₂-, - CH₂CH(CH₃)CH₂-, and/or the like. Other radical nomenclatures such as "alkylene" clearly indicate that the radical is a diradical.

The term "alkyl group" or "alkylene group" utilized herein refers to a branched or unbranched aliphatic hydrocarbon group. In some embodiments, an alkyl group may be substituted or unsubstituted. The alkyl group includes methyl group, an ethyl group, a propyl group, an isopropyl group, a butyl group, an isobutyl group, a tert-butyl group, a pentyl group, a hexyl group, a cyclopropyl group, a cyclopentyl group, a cyclohexyl group, a cycloheptyl group, etc., and is not necessarily limited thereto, and each of these may optionally be substituted or unsubstituted. In some embodiments, an alkyl group may have 1 to 6 carbon atoms. For example, the C1-C6 alkyl group may be methyl, ethyl, propyl, isopropyl, butyl, iso-butyl, sec-butyl, pentyl, 3-pentyl, hexyl, etc., but is not necessarily limited thereto.

The term "alkenyl group" utilized herein refers to a hydrocarbon group containing at least one carbon-carbon double bond and containing 2 to 20 carbon atoms, and the alkenyl group includes an ethenyl group, a 1-propenyl group, a 2-propenyl group, a 2-methyl-1-propenyl group, a 1-butenyl group, a 2-butenyl group, a cyclopropenyl group, a cyclopentenyl group, a cyclohexenyl group, a cycloheptenyl group, etc., and is not limited thereto. In some embodiments, an alkenyl group may be substituted or unsubstituted. In some embodiments, an alkenyl group may have 2 to 40 carbon atoms.

The term "alkynyl group" is a hydrocarbon group containing at least one carbon-carbon triple bond and containing 2 to 20 carbon atoms. The alkynyl group includes an ethynyl group, a 1-propynyl group, a 1-butynyl group, a 2-butynyl group, and is not limited thereto. In some embodiments, an alkynyl group may be substituted or unsubstituted. In some embodiments, an alkynyl group may have 2 to 40 carbon atoms.

The term "cycloalkyl group" utilized herein refers to a fully saturated carbocyclic ring or a fully saturated ring system. For example, the term refers to cyclopropyl, cyclobutyl, cyclopentyl, or cyclohexyl.

The term "aromatic" utilized herein refers to a ring or ring system having a conjugated pi electron system, and includes carbocyclic aromatic groups (for example, phenyl groups) and heterocyclic aromatic groups (for example, pyridine). The term includes monocyclic or fused polycyclic rings (that is, rings that share adjacent pairs of atoms), provided that the entire ring system is aromatic.

The term "aryl group" utilized herein refers to an aromatic ring whose ring backbone contains only carbon, a ring system (that is, two or more fused rings sharing two adjacent carbon atoms), or a ring in which a plurality of aromatic rings are linked to each other via a single bond, -O-, -S-, -C(=O)-, -S(=O)₂-, -Si(Ra)(Rb)-(Ra and Rb may each independently be a C1 to C10 alkyl group), a C1 to C10 alkylene group unsubstituted or substituted with halogen, or-C(=O)-NH-. If (e.g., when) the aryl group is a ring system, each ring in the system is aromatic. For example, the aryl group includes, but is not limited to, a phenyl group, a biphenyl group, a naphthyl group, a phenanthrenyl group, a naphthacenyl group, and/or the like. The aryl group may be substituted or unsubstituted.

The term "heteroaryl group" utilized herein refers to an aromatic ring system which has one ring, a plurality of fused rings, or a ring in which a plurality of rings are linked to each other via a single bond, -O-, -S-, -C(=O)-, -S(= O)₂-, -Si(Ra)(Rb)-(Ra and Rb are independently an alkyl group having 1 to 10 carbon atoms), a C1 to C10 alkylene group unsubstituted or substituted with halogen, or -C(=O)-NH-, and in which at least one ring atom is not carbon, that is, a heteroatom. In fused ring systems, one or more heteroatoms may be present in only one ring. In fused ring systems, one or more heteroatoms may be present in only one ring. For example, heteroatoms include, but are not necessarily limited to, oxygen, sulfur, and nitrogen. For example, the heteroaryl group may include a furanyl group, a thienyl group, an imidazolyl group, a quinazolinyl group, a quinolinyl group, an isoquinolinyl group, a quinoxalinyl group, a pyridinyl group, a pyrrolyl group, an oxazolyl group, an indolyl group, and/or the like, and is not limited thereto.

The term "halogen" utilized herein is a stable element belonging to Group 17 of the Periodic Table of Elements, and may be, for example, fluorine, chlorine, bromine, or iodine, or for example, fluorine and/or chlorine.

Unless noted otherwise in this specification, the weight average molecular weight of polymers is determined by gel permeation chromatography (GPC) relative to polystyrene standards.

Through the following Examples and Comparative Examples, the present disclosure will be explained in more detail. However, these examples are intended to illustrate the present disclosure, and the scope of the present creative concept is not limited thereto.

### Manufacture of sulfide-based composite cathode active material

### Preparation Example 1: Li₂S-LiI-CNF composite cathode active material

Li₂S and LiI were mixed at a weight ratio of about 30:20. The mixture was mechanically milled utilizing a ball mill to prepare a Li₂S-LiI composite. Milling conditions were about 25°C, about 510 rpm, and about 10 hours.

The Li₂S-LiI composite and carbon nanofiber (CNF) were mixed at a weight ratio of about 50:10. The mixture was mechanically milled utilizing a ball mill to prepare a Li₂S-LiI-CNF composite. Milling conditions were about 25°C, about 510 rpm, and about 10 hours. The Li₂S-LiI-CNF composite was utilized as a composite cathode active material.

### Manufacture of all-solid-state secondary batteries

### Example 1: Elastic sheet (50 µm)/cathode layer (112 µm, NCA)/solid electrolyte layer (30 µm)/anode layer (37 µm, Si particle: CNT:binder=3:1:0.28)

### Manufacturing of cathode layer

Li₂O-ZrO₂ (LZO)-coated LiNi_{0.8}Co_{0.15}Al_{0.05}O₂ (NCM) was prepared as a cathode active material. The LZO-coated cathode active material was manufactured according to the method disclosed in Korean Patent Publication No. 10-2016-0064942 (the entire content of which is incorporated herein by reference). Li₆PS₅Cl, which is an argyrodite-type or kind (e.g., argyrodite) crystal (D50 = about 0.5 *µ*m, crystalline), was prepared as a solid electrolyte. A polytetrafluoroethylene (PTFE) binder was prepared as a binder. Carbon nanofibers (CNF) were prepared as a conductive material. These materials were mixed with a xylene solvent in a weight ratio of cathode active material: solid electrolyte: conductive material: binder = about 84:11:3:2. The slurry was formed into a sheet and vacuum-dried at about 40 °C for about 8 hours to prepare a cathode sheet. The prepared cathode sheet was placed on a carbon layer of a cathode current collector consisting of an aluminum foil having one side that is coated with a carbon layer, followed by heated-roll-pressing at a temperature of about 85 °C. The total thickness of the cathode layer was about 112 µm. The thickness of the cathode active material layer was about 92 µm, and the thickness of the carbon-coated aluminum foil was about 20 µm.

The initial charge capacity of the cathode was measured utilizing the half-cell described above. The initial charge capacity of the cathode active material layer was about 25 mAh.

### Manufacturing of anode

A SUS (stainless steel) foil having a thickness of about 10 µm was prepared as an anode current collector. Silicon (Si) particles with a particle diameter of about 1 µm were prepared as an anode active material. Carbon nanotubes were prepared as a fibrous carbon-based material. Carbon nanotubes included carbon nanotube primary structures and carbon nanotube secondary structures. The carbon nanotube primary structure consisted of one carbon nanotube unit. The length of a carbon nanotube unit was about 200 nm to about 300 nm, and the diameter of the carbon nanotube unit was about 5 nm to about 10 nm. The carbon nanotube secondary structure was formed by agglomerating a plurality of carbon nanotube units. The length of the carbon nanotube secondary structure was about 5 µm and the diameter thereof was about 40 nm.

About 4 g of mixed powder of silicon (Si) particles and carbon nanotubes in a weight ratio of about 3:1 was placed in a container, and about 4 g of NMP solution containing about 7 wt% of lithium substituted polyacrylic acid (Li-PAA)F binder was added thereto to prepare a mixed solution. NMP was added to the prepared mixed solution gradually while stirring the mixed solution to prepare slurry. The prepared slurry was applied onto a SUS substrate utilizing a bar coater, dried in air at about 80°C for about 10 minutes, and then vacuum-dried at about 40°C for about 10 hours to prepare a laminate. The prepared laminate was cold roll pressed to planarize the surface thereof to prepare an anode having a first anode active material layer/anode current collector structure. The thickness of the first anode active material layer was about 27 µm. Li-PAA was prepared by mixing polyacrylic acid and LiOH at a ratio of about 1 mole LiOH per about 1 mole of polyacrylic acid-COOH group and then drying.

The initial charge capacity of the anode was measured utilizing the half-cell described previously. The initial charge capacity of the first anode active material layer was about 9.2 mAh.

The ratio (B/A) of the initial charge capacity (B) of the first anode active material layer and the initial charge capacity (A) of the cathode active material layer was about 0.37. The initial charge capacity of the cathode active material layer was determined by charging from 1^{st} open circuit voltage to about 4.25 V vs. Li/Li⁺. The initial charge capacity of the first anode active material layer was determined by charging from a 2^{nd} open circuit voltage to about 0.01 V vs. Li/Li⁺.

Regarding each of Examples 2 to 5 and Comparative Example 1, the ratios (B/ A) wherein about 0.24 to about 0.45 were B is the initial charge capacity of the first anode active material layer and A is the initial charge capacity of the cathode active material layer.

### Manufacture of solid electrolyte layer

A mixture was prepared by adding about 1.5 parts by weight of an acrylic binder based on about 98.5 parts by weight of the solid electrolyte to Li₆PS₅Cl solid electrolyte (D₅₀ = about 3.0 mm, crystalline), which is an argyrodite type or kind (e.g., argyrodite) crystal. Octyl acetate was added to the prepared mixture while stirring, to prepare slurry. The prepared slurry was applied utilizing a bar coater on a nonwoven fabric placed on a PET substrate, and dried in air at about 80 °C for about 10 minutes to prepare a laminate. The prepared laminate was vacuum dried at about 80°C for about 2 hours to prepare a solid electrolyte layer.

### Inactive member: elastic sheet

A porous polyurethane foam sheet having a thickness of about 50 µm was prepared as an elastic sheet.

### Manufacture of all-solid-state secondary batteries

A laminate was prepared by placing a first anode active material layer on an anode such that the first anode active material layer was in contact with a solid electrolyte layer, and placing a cathode on the solid electrolyte layer such that a cathode active material layer is in contact with the solid electrolyte layer.

The prepared laminate was plate pressed at about 85 °C and a pressure of about 500 MPa for about 30 min. Through this pressure treatment, the solid electrolyte layer were sintered and battery characteristics were improved. The thickness of the sintered solid electrolyte layer was about 30 µm. The density of the Li₆PS₅Cl solid electrolyte, which is an argyrodite type or kind (e.g., argyrodite) crystal included in the sintered solid electrolyte layer, was about 1.6 g/cc. The area of the solid electrolyte layer was equal to the area of the anode. An elastic sheet was additionally placed on the cathode current collector of the pressurized laminate.

The laminate further including the elastic sheet was placed in a pouch and vacuum sealed to manufacture an all-solid-state secondary battery. Parts of the cathode current collector and the anode current collector were extended outside the sealed battery and utilized as positive and negative terminals.

### Example 2: Elastic sheet (50 µm)/cathode layer (112 µm, NCA)/solid electrolyte layer (30 µm)/anode layer (37 µm, Si particle: CNT:binder=3.2:0.8:0.28)

An all-solid-state secondary battery was manufactured in substantially the same manner as in Example 1, except that the composition ratio of the anode active material and the fibrous carbon-based material was changed to be about 3.2:0.8 (4:1).

### Example 3: Elastic sheet (50 µm)/cathode layer (112 µm, NCA)/solid electrolyte layer (30 µm)/anode layer (37 µm, Si particle: CNT:binder=3.5:0.5:0.28)

An all-solid-state secondary battery was manufactured in substantially the same manner as in Example 1, except that the composition ratio of the anode active material and the fibrous carbon-based material was changed to be about 3.5:0.5 (7:1).

### Example 4: Elastic sheet (50 µm)/cathode layer (112 µm, NCA)/solid electrolyte layer (30 µm)/anode layer (37 µm, Si particle: CNT:binder=3.6:0.4:0.28)

An all-solid-state secondary battery was manufactured in substantially the same manner as in Example 1, except that the composition ratio of the anode active material and the fibrous carbon-based material was changed to be about 3.6:0.4 (9:1).

### Example 5: Elastic sheet (50 µm)/cathode layer (112 µm, NCA)/solid electrolyte layer (30 µm)/anode layer (37 µm, Si particle: CNT:binder=2:2:0.28)

An all-solid-state secondary battery was manufactured in substantially the same manner as in Example 1, except that the composition ratio of the anode active material and the fibrous carbon-based material was changed to be about 2:2 (1:1).

### Comparative Example 1: Elastic sheet (50 µm)/cathode layer (112 µm, NCA)/solid electrolyte layer (30 µm)/anode layer (37 µm, Si particle: CNT:binder=3.6:0.4:0)

An all-solid-state secondary battery was manufactured in substantially the same manner as in Example 4, except that a binder was not utilized.

### Reference Example 1: Elastic sheet (100 µm)/cathode layer (112 µm, NCA)/solid electrolyte layer (30 µm)/anode layer (17 µm, Ag-C+binder)

An all-solid-state secondary battery was manufactured in substantially the same manner as in Example 1, except that the anode prepared by the following method was utilized and the thickness of the elastic sheet was changed to be about 100 µm.

### Manufacturing of anode

SUS foil having a thickness of about 10 µm was prepared as an anode current collector. About 4 g of a mixture including carbon black (CB) and silver (Ag) in a weight ratio of about 3:1 was placed in a container, and then about 4 g of an NMP solution containing about 7 wt% PVDF binder (#9300 from Kureha company) was added thereto to prepare a mixed solution. NMP was added to the prepared mixed solution gradually while stirring the mixed solution to prepare slurry. The prepared slurry was applied onto a SUS substrate utilizing a bar coater, dried in air at about 80°C for about 10 minutes, and then vacuum dried at 40°C for 10 hours to prepare a laminate. The prepared laminate was cold roll pressed to planarize the surface thereof to prepare an anode having a first anode active material layer/anode current collector structure. The thickness of the first anode active material layer was about 7 µm.

### Example 6: Cathode layer (113.8 µm, Li₂S-LiI-CNF)/solid electrolyte layer (30 µm)/anode layer (37 µm, Si particle:CNT:binder=3:1:0.28)

An all-solid-state secondary battery was manufactured in substantially the same manner as Example 1, except a cathode including a sulfide-based cathode active material was utilized, and the elastic sheet was omitted.

### Manufacturing of cathode

The Li₂S-LiI-CNF composite prepared in Preparation Example 1 was prepared as a cathode active material. Li₆PS₅Cl, which is an argyrodite-type or kind (e.g., argyrodite) crystal (D50 = about 3.0 *µ*m, crystalline), was prepared as a solid electrolyte. PTFE was prepared as a binder. A cathode mixture was prepared by mixing the composite cathode active material, the solid electrolyte, and the binder in a weight ratio of about 60:40:1.2. The cathode mixture was obtained by mixing utilizing a ball mill.

The cathode mixture was placed on at least one side (e.g., one or both (e.g., opposite) sides) of a cathode current collector consisting of aluminum foil having one side coated with carbon, and a cathode was manufactured by plate pressing at a pressure of about 200 MPa for about 10 minutes. The total thickness of the cathode layer was about 113.8 µm. The thickness of the cathode active material layer was about 93.8 µm, and the thickness of the carbon-coated aluminum foil was about 20 µm.

In Example 1, the ratio (B/A) of the initial charge capacity (B) of the first anode active material layer and the initial charge capacity (A) of the cathode active material layer was about 0.35. The initial charge capacity of the cathode active material layer was determined by charging from 1^{st} open circuit voltage to about 2.8 V vs. Li/Li⁺. The initial charge capacity of the first anode active material layer was determined by charging from a 2^{nd} open circuit voltage to about 0.01 V vs. Li/Li⁺.

### Comparative Example 2: Cathode layer (113.8 µm, Li₂S-LiI-CNF)/solid electrolyte layer (30 µm)/anode layer (37 µm, Si particle:CNT:binder=3.6:0.4:0)

An all-solid-state secondary battery was manufactured in substantially the same manner as in Example 4, except that the cathode of Example 6 was utilized, the binder was not utilized, and the elastic sheet was omitted.

### Reference Example 2: Elastic sheet (50 µm)/cathode layer (113.8 µm, Li₂S-LiI-CNF)/solid electrolyte layer (30 µm)/anode layer (17 µm, Ag-C+binder)

An all-solid-state secondary battery was manufactured in substantially the same manner as in Example 6, except that an anode prepared by the following method was utilized and an elastic sheet having a thickness of about 50 µm was utilized.

### Manufacturing of anode

SUS foil having a thickness of about 10 µm was prepared as an anode current collector. About 4 g of a mixture including carbon black (CB) and silver (Ag) in a weight ratio of about 3:1 was placed in a container, and then about 4 g of an NMP solution containing about 7 wt% PVDF binder (#9300 from Kureha company) was added thereto to prepare a mixed solution. NMP was added to the prepared mixed solution gradually while stirring the mixed solution to prepare slurry. The prepared slurry was applied onto a SUS substrate utilizing a bar coater, dried in air at about 80°C for about 10 minutes, and then vacuum dried at about 40°C for about 10 hours to prepare a laminate. The prepared laminate was cold roll pressed to planarize the surface thereof to prepare an anode having a first anode active material layer/anode current collector structure. The thickness of the first anode active material layer was about 7 µm.

### Evaluation Example 1-1: Evaluation of change in volume during charging and discharging (NCA cathode active material)

For the all-solid-state secondary batteries prepared according to Example 1 and Reference Example 1, only the charging step (e.g., act or task) in the first cycle was performed in the charging and discharging experiments of Evaluation Example 2, and then a scanning electron microscope image of a cross-section of each of the all-solid-state secondary batteries was obtained and the change in thickness was identified.

After the charging in the first cycle, a lithium metal layer was formed between the first anode active material layer and the anode current collector.

Regarding the all-solid-state secondary battery of Example 1, the thickness of a lithium metal layer formed between the first anode active material layer and the anode current collector after initial charging was about 8 µm, which was smaller than the thickness of the first anode active material layer (about 34 µm) after charging.

The increase in thickness of the all-solid-state secondary battery of Example 1 after initial charging was about 10 % or less of the initial thickness of the all-solid-state secondary battery. As a result, the change in volume was suppressed or reduced during the charging and discharging process of the all-solid-state secondary battery of Example 1.

In the all-solid-state secondary battery of Example 1, an elastic member having a thickness of about 50 µm was utilized to tolerate the change in volume during charging and discharging. Due to the inclusion of an elastic member having a thickness of about 50 µm, the energy density of the all-solid-state secondary battery was slightly reduced.

Regarding the all-solid-state secondary battery of Reference Example 1, the thickness of a lithium metal layer formed between the first anode active material layer and the anode current collector after initial charging was about 30 µm, which was greater than the thickness of the first anode active material layer (about 7 µm) after charging.

The increase in thickness of the all-solid-state secondary battery of Reference Example 1 after initial charging was more than about 15 % of the initial thickness of the all-solid-state secondary battery. As a result, the change in volume was significant during the charging and discharging process of the all-solid-state secondary battery of Reference Example 1.

In the all-solid-state secondary battery of Reference Example 1, an elastic member having a thickness of about 100 µm was utilized to tolerate the change in volume during charging and discharging. As a result, the energy density of the all-solid-state secondary battery was further reduced by including an elastic member having a thickness of about 100 µm.

### Evaluation Example 1-2: Evaluation of change in volume during charging and discharging (Li₂S-LiI-CNF cathode active material)

For the all-solid-state secondary batteries prepared according to Example 6 and Reference Example 2, only the charging step (e.g., act or task) in the first cycle was performed in the charging and discharging experiments of Evaluation Example 2, and then a scanning electron microscope image of a cross-section of each of the all-solid-state secondary batteries was obtained and the change in thickness was identified.

After the charging in the first cycle, a lithium metal layer was formed between the first anode active material layer and the anode current collector.

Regarding the all-solid-state secondary battery of Example 6, the thickness of a lithium metal layer formed between the first anode active material layer and the anode current collector after initial charging was about 8 µm, which was smaller than the thickness of the first anode active material layer (34 µm) after charging.

The increase in thickness of the all-solid-state secondary battery of Example 6 after initial charging was about 5 % or less of the initial thickness of the all-solid-state secondary battery. As a result, the change in volume was insignificant during the charging and discharging process of the all-solid-state secondary battery of Example 6.

In the all-solid-state secondary battery of Example 6, an elastic member was not utilized to tolerate change in volume during charging and discharging. As a result, there was no decrease in energy density of the all-solid-state secondary battery due to the elastic member.

Regarding the all-solid-state secondary battery of Reference Example 2, the thickness of a lithium metal layer formed between the first anode active material layer and the anode current collector after initial charging was about 30 µm, which was greater than the thickness of the first anode active material layer (about 7 µm).

The increase in thickness of the all-solid-state secondary battery of Reference Example 2 after initial charging was more than about 10 % of the initial thickness of the all-solid-state secondary battery. As a result, the change in volume was significant during the charging and discharging process of the all-solid-state secondary battery of Reference Example 2.

In the all-solid-state secondary battery of Reference Example 2, an elastic member having a thickness of about 50 µm was utilized to tolerate the increased change in volume during charging and discharging. Due to the inclusion of an elastic member having a thickness of about 50 µm, the energy density of the all-solid-state secondary battery was slightly reduced.

### Evaluation Example 2: Charging/discharging test

The charging/discharging characteristics of the all-solid-state secondary batteries manufactured according to Examples 1 to 5, Comparative Example 1, and Reference Example 1 were evaluated by the following charging/discharging test. The charging/discharging test was performed by placing the all-solid-state secondary batteries in a constant temperature bath at about 45°C.

In the first cycle, charging was performed for about 12.5 hours at a constant current of about 0.5 mA/cm² until the battery voltage was about 3.9 V to about 4.25 V. Subsequently, discharging was performed for about 12.5 hours at a constant current of about 0.5 mA/cm² until the battery voltage reached about 2.5 V.

In some embodiments, the charging/discharging characteristics of the all-solid-state secondary batteries manufactured in Example 6, Comparative Example 2, and Reference Example 2 were evaluated by the following charging/discharging test. The charging/discharging test was performed by placing the all-solid-state secondary batteries in a constant temperature bath at about 45°C.

In the first cycle, charging was performed for about 12.5 hours at a constant current of about 0.1 C until the battery voltage reached about 2.5 V to about 2.8 V. Subsequently, discharging was performed for about 12.5 hours at a constant current of about 0.1 C until the battery voltage reached about 0.3 V.

The discharge capacity of the first cycle was taken as the standard capacity.

After the second cycle, charging and discharging were performed up to about 500 cycles under the same conditions as the first cycle. The measurement results are shown in Table 1.

The number of cycles refers to the number of cycles required for the discharge capacity to decrease to about 80 % of the standard capacity after the second cycle. It was considered to have excellent or suitable lifespan characteristics as the number of cycles was increased.

**Table 1**

| | Number of cycles [times] |
|---|---|
| Example 1 Elastic sheet (50 µm)/cathode layer (112 µm, NCA)/solid electrolyte layer (30 µm)/anode layer (37 µm, Si particle: CNT:binder=3:1:0.28) | 500 |
| Example 2 Elastic sheet (50 µm)/cathode layer (112 µm, NCA)/solid electrolyte layer (30 µm)/anode layer (37 µm, Si particle: CNT:binder=3.2:0.8:0.28) | 412 |
| Example 3 Elastic sheet (50 µm)/cathode layer (112 µm, NCA)/solid electrolyte layer (30 µm)/anode layer (37 µm, Si particle: CNT:binder=3.5:0.5:0.28) | 352 |
| Example 4 Elastic sheet (50 µm)/cathode layer (112 µm, NCA)/solid electrolyte layer (30 µm)/anode layer (37 µm, Si particle: CNT:binder=3.6:0.4:0.28) | 183 |
| Example 5 Elastic sheet (50 µm)/cathode layer (112 µm, NCA)/solid electrolyte layer (30 µm)/anode layer (37 µm, Si particle: CNT:binder=2:2:0.28) | 250 |
| Comparative Example 1: Elastic sheet (50 µm)/cathode layer (112 µm, NCA)/solid electrolyte layer (30 µm)/anode layer (37 µm, Si particle: CNT:binder=3.6:0.4:0) | 12 |
| Reference Example 1 Elastic sheet (100 µm)/cathode layer (112 µm, NCA)/solid electrolyte layer (30 µm)/anode layer (17 µm, Aq-C+binder) | 400 |
| Example 6 Cathode layer (113.8 µm, Li₂S-LiI-CNF)/solid electrolyte layer (30 µm)/anode layer (37 µm, Si particle:CNT:binder=3:1:0.28) | 400 |
| Comparative Example 2 Cathode layer (113.8 µm, Li₂S-LiI-CNF)/solid electrolyte layer (30 µm)/anode layer (37 µm, Si particle:CNT:binder=3.6:0.4:0) | 8 |
| Reference Example 2: Elastic sheet (50 µm)/cathode layer (113.8 µm, Li₂S-LiI-CNF)/solid electrolyte layer (30 µm)/anode layer (17 µm, Aq-C+binder) | 300 |

As shown in Table 1, the all-solid-state secondary batteries of Examples 1 to 5 showed excellent or suitable lifespan characteristics by suppressing change in volume during charging and discharging and suppressing an increase in internal resistance.

The all-solid-state secondary batteries of Examples 1 to 5 had improved lifespan characteristics compared to the all-solid-state secondary battery of Comparative Example 1 that did not contain a binder.

Regarding the all-solid-state secondary battery of Comparative Example 1, it was determined that the lifespan characteristics of the all-solid-state secondary battery were reduced due to disconnection of the conductive path due to the separation of an electrode and/or the separation of the anode active material and the fibrous carbon-based material.

The all-solid-state secondary battery of Example 6 showed excellent or suitable lifespan characteristics by suppressing change in volume during charging and discharging and suppressing increase in internal resistance.

The all-solid-state secondary battery of Example 6 had improved lifespan characteristics compared to the all-solid-state secondary battery of Comparative Example 2 that did not contain a binder.

Regarding the all-solid-state secondary battery of Comparative Example 2, it was determined that the lifespan of the all-solid-state secondary battery was decreased by an increase in the interfacial resistance between the first anode active material layer and the solid electrolyte due to separation of an electrode or between the first anode active material layer and the anode current collector during the charging and discharging process due to separation of an electrode active material layer.

### Evaluation Example 5: High rate characteristic evaluation

The high-rate characteristics of the all-solid-state secondary batteries of Examples 1 to 5, Comparative Example 1, and Reference Example 1 were evaluated by the following charging/discharging test. The charging/discharging test was performed by placing the all-solid-state secondary batteries in a constant temperature bath at about 45°C.

The all-solid-state secondary batteries of Examples 1 to 5, Comparative Example 1, and Reference Example 1 were charged at a constant current of about 0.1 C rate at about 45°C until the voltage reached about 3.9 V (vs. Li), and while the voltage of about 3.9 V was maintained in constant voltage mode, a cut-off was performed at about 0.05 C rate. Subsequently, the discharging was performed at a constant current of about 0.1 C rate until the voltage reached about 2.5 V (vs. Li) (formation cycle).

The all-solid-state secondary battery that had undergone the formation cycle was charged at a constant current of about 0.2 C rate at about 45°C until the voltage reached about 3.9 V (vs. Li). Subsequently, the discharging was performed at a constant current of about 0.2 C rate until the voltage reached about 2.5 V (vs. Li) (first cycle).

The all-solid-state secondary battery that had undergone the first cycle was charged at a constant current of about 0.2 C rate at about 45°C until the voltage reached about 3.9 V (vs. Li). Subsequently, the discharging was performed at a constant current of about 0.33 C rate until the voltage reached about 2.5 V (vs. Li) (second cycle).

The all-solid-state secondary battery that had undergone the second cycle was charged at a constant current of about 0.2 C rate at about 45°C until the voltage reached about 3.9 V (vs. Li). Subsequently, the discharging was performed at a constant current of about 0.5 C rate until the voltage reached about 2.5 V (vs. Li) (third cycle).

The all-solid-state secondary battery that had undergone the third cycle was charged at a constant current of about 0.2 C rate at about 45°C until the voltage reached about 3.9 V (vs. Li). Subsequently, the discharging was performed at a constant current of about 1.0 C rate until the voltage reached about 2.5 V (vs. Li) (fourth cycle).

In all charging/discharging cycles, a 10-minute stop time was provided after every charging/discharging cycle. Some of the results of the room-temperature charging and discharging experiment are shown in Table 2. High rate characteristics are defined by Equation 1.

The high-rate characteristics of the all-solid-state secondary batteries of Example 6, Comparative Example 2, and Reference Example 2 were evaluated by the following charging/discharging test. The charging/discharging test was performed by placing the solid secondary battery in a constant temperature bath at about 45 °C.

The all-solid-state secondary batteries of Example 6, Comparative Example 2, and Reference Example 2 were charged at a constant current of about 0.1 C rate at about 45°C until the voltage reached about 2.5 V (vs. Li), and while the voltage of about 2.5 V was maintained in constant voltage mode, a cut-off was performed at about 0.05 C rate. Subsequently, the discharging was performed at a constant current of about 0.1 C rate until the voltage reached about 0.3 V (vs. Li) (formation cycle).

The all-solid-state secondary battery that had undergone the formation cycle was charged at a constant current of about 0.2 C rate at about 45°C until the voltage reached about 2.5 V (vs. Li). Subsequently, the discharging was performed at a constant current of about 0.2 C rate until the voltage reached about 0.3 V (vs. Li) (first cycle).

The all-solid-state secondary battery that had undergone the first cycle was charged at a constant current of about 0.2 C rate at about 45°C until the voltage reached about 2.5 V (vs. Li). Subsequently, the discharging was performed at a constant current of about 0.33 C rate until the voltage reached about 0.3 V (vs. Li) (second cycle).

The all-solid-state secondary battery that had undergone the second cycle was charged at a constant current of about 0.2 C rate at about 45°C until the voltage reached about 2.5 V (vs. Li). Subsequently, the discharging was performed at a constant current of about 0.5 C rate until the voltage reached about 0.3 V (vs. Li) (third cycle).

The all-solid-state secondary battery that had undergone the third cycle was charged at a constant current of about 0.2 C rate at about 45°C until the voltage reached about 2.5 V (vs. Li). Subsequently, the discharging was performed at a constant current of about 1.0 C rate until the voltage reached about 0.3 V (vs. Li) (fourth cycle).

In all charging/discharging cycles, a 10-minute stop time was provided after every charging/discharging cycle. Some of the results of the room-temperature charging and discharging experiment are shown in Table 2. High rate characteristics are defined by Equation 1. High rate characteristics [%]=[Discharge capacity in the 4thcycle/discharge capacity in the formation cycle] × 100

**Table 2**

| | High rate characteristics (1C/0.1C) [%] |
|---|---|
| Example 1 Elastic sheet (50 µm)/cathode layer (112 µm, NCA)/solid electrolyte layer (30 µm)/anode layer (37 µm, Si particle: CNT:binder=3:1:0.28) | 85 |
| Example 2 Elastic sheet (50 µm)/cathode layer (112 µm, NCA)/solid electrolyte layer (30 µm)/anode layer (37 µm, Si particle: CNT:binder=3.2:0.8:0.28) | 84 |
| Example 3 Elastic sheet (50 µm)/cathode layer (112 µm, NCA)/solid electrolyte layer (30 µm)/anode layer (37 µm, Si particle: CNT:binder=3.5:0.5:0.28) | 83.5 |
| Example 4 Elastic sheet (50 µm)/cathode layer (112 µm, NCA)/solid electrolyte layer (30 µm)/anode layer (37 µm, Si particle: CNT:binder=3.6:0.4:0.28) | 80.2 |
| Example 5 Elastic sheet (50 µm)/cathode layer (112 µm, NCA)/solid electrolyte layer (30 µm)/anode layer (37 µm, Si particle: CNT:binder=2:2:0.28) | 82.2 |
| Comparative Example 1 Elastic sheet (50 µm)/cathode layer (112 µm, NCA)/solid electrolyte layer (30 µm)/anode layer (37 µm, Si particle: CNT:binder=3.6:0.4:0) | 18 |
| Example 6 Cathode layer (113.8 µm, Li₂S-LiI-CNF)/solid electrolyte layer (30 µm)/anode layer (37 µm, Si particle:CNT:binder=3:1:0.28) | 75 |
| Comparative Example 2 Cathode layer (113.8 µm, Li₂S-LiI-CNF)/solid electrolyte layer (30 µm)/anode layer (37 µm, Si particle:CNT:binder=3.6:0.4:0) | 15 |

As shown in Table 2, the all-solid-state secondary batteries of Examples 1 to 5 had improved high-rate characteristics compared to the all-solid-state secondary battery of Comparative Example 1.

Regarding the all-solid-state secondary batteries of Examples 1 to 5, although the first anode active material layer undergoes the change in volume during charging and discharging, due to the inclusion of the binder in the first anode active material layer, the conductive path between the anode active material and the fibrous carbon-based material is maintained and the uniformity of the electrode reaction was improved. Accordingly, the high-rate characteristics of the all-solid-state secondary batteries of Examples 1 to 5 are improved compared to that of the all-solid-state secondary battery of Comparative Example 1.

The all-solid-state secondary battery of Example 6 had improved high-rate characteristics compared to the all-solid-state secondary battery of Comparative Example 2.

Regarding the all-solid-state secondary battery of Example 6, although the first anode active material layer undergoes the change in volume in the first anode active material layer during charging and discharging due to the inclusion of the binder in the first anode active material layer, the conductive path between the anode active material and the fibrous carbon-based material is maintained and the uniformity of the electrode reaction was improved. Accordingly, the high-rate characteristics of the all-solid-state secondary batteries of Examples 1 to 5 are improved compared to that of the all-solid-state secondary battery of Comparative Example 2.

According to an aspect, due to the inclusion of a fibrous carbon-based material and a binder in an anode active material layer, which has a smaller initial charge capacity than the initial charge capacity of a cathode active material layer, an all-solid-state secondary battery with reduced change in volume during charging and discharging and improved cycle characteristics can be provided.

In present disclosure, "not include a or any 'component'", "exclude a or any 'component'", "'component'-free", and/or the like refers to that the "component" not being added, selected or utilized as a component in the composition or compound, but the "component" of less than a suitable amount may still be included due to other impurities and/or external factors.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof.

Embodiments are set out in the following clauses:
Clause 1. An all-solid-state secondary battery comprising:
   a cathode layer; an anode layer; and a solid electrolyte layer between the cathode layer and the anode layer, wherein
   the cathode layer includes a cathode current collector and a cathode active material layer on one side of the cathode current collector,
   the anode layer includes an anode current collector and a first anode active material layer on one side of the anode current collector,
   the first anode active material layer includes: an anode active material capable of forming an alloy or compound with lithium; a fibrous carbon-based material; and a binder,
   a ratio (B/A) of an initial charge capacity (B) of the first anode active material layer to an initial charge capacity (A) of the cathode active material layer is about 0.01 to about 0.75,
   the initial charge capacity of the cathode active material layer is determined by charging from a 1^{st} open circuit voltage to a maximum charging voltage with respect to Li/Li+, and
   an initial charge capacity of the first anode active material layer is determined by charging from a 2^{nd} open circuit voltage to 0.01 V with respect to Li/Li⁺.
Clause 2. The all-solid-state secondary battery of clause 1, wherein the anode active material is in the form of particles having a size of 2 µm or less, and
   an aspect ratio of the anode active material is 5 or less.
Clause 3. The all-solid-state secondary battery of clause 1 or clause 2, wherein the first anode active material layer includes a metal-based anode active material, and
   the metal-based anode active material includes silicon (Si), gold (Au), platinum (Pt), palladium (Pd), silver (Ag), aluminum (Al), bismuth (Bi), tin (Sn), zinc (Zn), or a combination thereof.
Clause 4. The all-solid-state secondary battery of clauses 1 to 3, wherein the first anode active material layer includes a mixture of first particles and second particles, wherein the first particles consist of the anode active material, and the second particles consist of the fibrous carbon-based material, and
   a content of the second particles is about 10 wt% to about 70 wt%, based on the total weight of the mixture.
Clause 5. The all-solid-state secondary battery of clauses 1 to 4, wherein a size of the anode active material is smaller than a length of the fibrous carbon-based material, and
   a ratio of the size of the anode active material to the length of the fibrous carbon-based material is about 1:10 to about 1:2000.
Clause 6. The all-solid-state secondary battery of clauses 1 to 5, wherein the fibrous carbon-based material is a conductive elastomer material,
   an aspect ratio of the fibrous carbon-based material is 10 or more, and
   the fibrous carbon-based material comprises an amorphous fibrous carbon-based material, a crystalline fibrous carbon-based material, or a combination thereof.
Clause 7. The all-solid-state secondary battery of clauses 1 to 6, wherein the fibrous carbon-based material comprises a fibrous carbon nanostructure, and
   the fibrous carbon nanostructure comprises carbon nanotubes, carbon nanofibers, carbon nanobelts, or a combination thereof.
Clause 8. The all-solid-state secondary battery of clauses 1 to 7, wherein the carbon nanotubes include a carbon nanotube primary structure, a carbon nanotube secondary structure formed by agglomeration of a plurality of carbon nanotube primary particles, or a combination thereof, and
   the carbon nanotube primary structure is a single carbon nanotube unit.
Clause 9. The all-solid-state secondary battery of clauses 1 to 8, wherein the carbon nanotube primary structure comprises single-walled carbon nanotubes (SWCNTs), double-walled carbon nanotubes (DWCNTs), and multi-walled carbon nanotubes (MWCNTs), or a combination thereof, and
   a diameter of the carbon nanotube primary structure is about 1 nm to about 20 nm, and a length of the carbon nanotube primary structure is about 100 nm to about 2 µm.
Clause 10. The all-solid-state secondary battery of clauses 1 to 9, wherein the carbon nanotube secondary structure comprises bundle-type carbon nanotubes, rope-type carbon nanotubes, or a combination thereof, and
   a diameter of the carbon nanotube secondary structure is about 2 nm to about 50 nm, and a length of the carbon nanotube secondary structure is about 500 nm to about 1000 µm.
Clause 11. The all-solid-state secondary battery of clauses 1 to 10, wherein the binder is a polymer binder, and the binder comprises a polar functional group,
   the polar functional group comprises a carboxyl group, a hydroxy group, an amide group, an aldehyde group, or a combination thereof,
   the polar functional group is partially or fully substituted with lithium, and
   the binder comprises a lithium-substituted polyacrylic acid.
Clause 12. The all-solid-state secondary battery of clauses 1 to 11, wherein a content of the binder is about 0.1 parts by weight to about 20 parts by weight, based on 100 parts by weight of the anode active material.
Clause 13. The all-solid-state secondary battery of clauses 1 to 12, wherein a thickness of the first anode active material layer is 50 % or less of a thickness of the cathode active material layer, and
   the thickness of the first anode active material layer is about 1 µm to about 50 µm.
Clause 14. The all-solid secondary battery of clauses 1 to 13, further comprising a second anode active material layer disposed at least one of between the anode current collector and the first anode active material layer and between the anode current collector and an electrolyte layer,
   the second anode active material layer is a metal layer, and the metal layer comprises lithium or a lithium alloy, and
   a thickness of the second anode active material layer is smaller than a thickness of the first anode active material layer.
Clause 15. The all-solid-state secondary battery of clauses 1 to 14, wherein the cathode active material layer comprises a cathode active material,
   the cathode active material comprises a sulfide-based cathode active material, an oxide-based cathode active material, or a combination thereof,
   the sulfide-based cathode active material comprises nickel sulfide, copper sulfide, Li₂S, a Li₂S-containing composite, or a combination thereof, and
   the oxide-based cathode active material comprises a lithium transition metal oxide, a metal oxide, or a combination thereof, and the lithium transition metal oxide comprises lithium cobalt oxide, lithium nickel oxide, and lithium nickel cobalt oxide, lithium nickel cobalt aluminum oxide, lithium nickel cobalt manganese oxide, lithium manganate, lithium iron phosphate, or a combination thereof, wherein the metal oxide comprises iron oxide, vanadium oxide, or a combination thereof.
Clause 16. The all-solid-state secondary battery of clauses 1 to 15, wherein the cathode active material layer further comprises one or more selected from a solid electrolyte, a conductive material, and a binder, and
   the solid electrolyte comprises a sulfide-based solid electrolyte, and the conductive material comprises a carbon-based conductive material.
Clause 17. The all-solid-state secondary battery of clauses 1 to 16, wherein the solid electrolyte layer comprises a solid electrolyte or a combination of the solid electrolyte and a gel electrolyte,
   the solid electrolyte comprises a sulfide-based solid electrolyte, an oxide-based solid electrolyte, a polymer solid electrolyte, or a combination thereof, and
   the gel electrolyte comprises a polymer gel electrolyte.
Clause 18. The all-solid-state secondary battery of clauses 1 to 17, wherein the sulfide-based solid electrolyte comprises at least one selected from Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCI, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is one of Ge, Zn, or Ga), Li₂S-GeS₂, Li₂S-SiS₂-Li₃PO₄, Li₂S-SiS₂-LiₚMO_{q} (where p and q are positive numbers and M is one of P, Si, Ge, B, Al, Ga, and In), Li₇₋ₓPS₆₋ₓClₓ(where 0≤x≤2), Li₇₋ₓPS₆₋ₓBrₓ (where 0≤x≤2), and Li₇₋ₓPS₆₋ₓIₓ (where 0≤x≤2),
   the sulfide-based solid electrolyte comprises an argyrodite-type solid electrolyte,
   the argyrodite-type solid electrolyte comprises one or more selected from Li₆PS₅Cl, Li₆PS₅Br, and Li₆PS₅I, and
   the argyrodite-type solid electrolyte has a density of about 1.5 g/cc to about 2.0 g/cc.
Clause 19. The all-solid-state secondary battery of clauses 1 to 18, wherein at least one of the cathode current collector and the anode current collector comprises a base film and a metal layer disposed on one side or opposite sides of the base film,
   the base film comprises a polymer, and the polymer comprises polyethylene terephthalate (PET), polyethylene (PE), polypropylene (PP), polybutylene terephthalate (PBT), polyimide (PI), or a combination thereof, and
   the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.
Clause 20. The all-solid-state secondary battery of clauses 1 to 19, further comprising a first inactive member disposed on another side of the cathode current collector and another side of the anode current collector, and
   the first inactive member is an elastic member.

## Claims

1. An all-solid-state secondary battery (1) comprising:
a cathode layer (10);
an anode layer (20); and
a solid electrolyte layer (30) between the cathode layer (10) and the anode layer (20),
wherein,
the cathode layer (10) comprises a cathode current collector (11) and a cathode active material layer (12) on a side of the cathode current collector (11),
the anode layer (20) comprises an anode current collector (21) and a first anode active material layer (22) on a side of the anode current collector (21),
the first anode active material layer (22) comprises:
an anode active material capable of forming an alloy or compound with lithium;
a fibrous carbon-based material; and
a binder,
a ratio (B/A) of an initial charge capacity (B) of the first anode active material layer (22) to an initial charge capacity (A) of the cathode active material layer (12) is about 0.01 to about 0.75,
the initial charge capacity of the cathode active material layer (12) is determined by charging from a 1^{st} open circuit voltage to a maximum charging voltage with respect to Li/Li⁺, and
an initial charge capacity of the first anode active material layer (22) is determined by charging from a 2^{nd} open circuit voltage to about 0.01 V with respect to Li/Li⁺.

2. The all-solid-state secondary battery (1) as claimed in claim 1, wherein the anode active material comprises particles having a size of 2 µm or less, and
an aspect ratio of the anode active material is 5 or less.

3. The all-solid-state secondary battery (1) as claimed in any of the preceding claim 1 or 2, wherein the anode active material comprises a metal-based anode active material, and
the metal-based anode active material comprises silicon (Si), gold (Au), platinum (Pt), palladium (Pd), silver (Ag), aluminum (Al), bismuth (Bi), tin (Sn), zinc (Zn), or a combination thereof.

4. The all-solid-state secondary battery (1) as claimed in any of the preceding claims 1 to 3, wherein the first anode active material layer (22) comprises a mixture of first particles and second particles, wherein the first particles comprise the anode active material, and the second particles comprise the fibrous carbon-based material, and
a content of the second particles is 10 wt% to 70 wt%, based on a 100 wt% total weight of the mixture.

5. The all-solid-state secondary battery (1) as claimed in any of the preceding claims 1 to 4, wherein a size of the anode active material is smaller than a length of the fibrous carbon-based material, and
a ratio of the size of the anode active material to the length of the fibrous carbon-based material is about 1:10 to about 1:2000.

6. The all-solid-state secondary battery (1) as claimed in any of the preceding claim 1 to 5, wherein the fibrous carbon-based material is a conductive elastometer material,
an aspect ratio of the fibrous carbon-based material is about 10 or more, and
the fibrous carbon-based material comprises an amorphous fibrous carbon-based material, a crystalline fibrous carbon-based material, or a combination thereof; and/or, wherein the fibrous carbon-based material comprises a fibrous carbon nanostructure, and
the fibrous carbon nanostructure comprises carbon nanotubes, carbon nanofibers, carbon nanobelts, or a combination thereof, preferably wherein the carbon nanotubes comprise a carbon nanotube primary structure, a carbon nanotube secondary structure formed by agglomeration of a plurality of carbon nanotube primary particles, or a combination thereof, and
the carbon nanotube primary structure is a single carbon nanotube unit, preferably wherein the carbon nanotube secondary structure comprises bundle-type carbon nanotubes, rope-type carbon nanotubes, or a combination thereof, and
a diameter of the carbon nanotube secondary structure is about 2 nm to about 50 nm, and a length of the carbon nanotube secondary structure is about 500 nm to about 1000 µm; and/or, wherein the carbon nanotubes comprise a carbon nanotube primary structure comprises single-walled carbon nanotubes (SWCNTs), double-walled carbon nanotubes (DWCNTs), and multi-walled carbon nanotubes (MWCNTs), or a combination thereof, and
a diameter of the carbon nanotube primary structure is 1 nm to 20 nm, and a length of the carbon nanotube primary structure is 100 nm to 2 µm.

7. The all-solid-state secondary battery (1) as claimed in any of the preceding claims 1 to 6, wherein the binder is a polymer binder, and the binder comprises a polar functional group,
the polar functional group comprises a carboxyl group, a hydroxyl group, an amide group, an aldehyde group, or a combination thereof,
the polar functional group is partially or fully substituted with lithium, and
the binder comprises a lithium-substituted polyacrylic acid.

8. The all-solid-state secondary battery (1) as claimed in any of the preceding claims 1 to 7, wherein a content of the binder is about 0.1 parts by weight to about 20 parts by weight, based on 100 parts by weight of the anode active material.

9. The all-solid-state secondary battery (1) as claimed in any of the preceding claims 1 to 8, wherein a thickness of the first anode active material layer (22) is about 50 % or less of a thickness of the cathode active material layer (12), and
the thickness of the first anode active material layer (22) is about 1 µm to about 50 µm.

10. The all-solid-state secondary battery (1) as claimed in any of the preceding claims 1 to 9, further comprising a second anode active material layer (24) at at least one of between the anode current collector (21) and the first anode active material layer (22) or between the anode current collector (21) and an electrolyte layer,
the second anode active material layer (24) is a metal layer, and the metal layer comprises lithium or a lithium alloy, and
a thickness of the second anode active material layer (24) is smaller than a thickness of the first anode active material layer (22).

11. The all-solid-state secondary battery (1) as claimed in any of the preceding claims 1 to 10, wherein
the cathode active material layer (12) comprises a cathode active material,
the cathode active material comprises a sulfide-based cathode active material, an oxide-based cathode active material, or a combination thereof,
the sulfide-based cathode active material comprises nickel sulfide, copper sulfide, Li₂S, a Li₂S-containing composite, or a combination thereof, and
the oxide-based cathode active material comprises a lithium transition metal oxide, a metal oxide, or a combination thereof, and the lithium transition metal oxide comprises lithium cobalt oxide, lithium nickel oxide, and lithium nickel cobalt oxide, lithium nickel cobalt aluminum oxide, lithium nickel cobalt manganese oxide, lithium manganate, lithium iron phosphate, or a combination thereof, wherein the metal oxide comprises iron oxide, vanadium oxide, or a combination thereof; and/or
wherein
the cathode active material layer (12) further comprises one or more selected from among a solid electrolyte, a conductive material, and a binder,
the solid electrolyte comprises a sulfide-based solid electrolyte, and
the conductive material comprises a carbon-based conductive material.

12. The all-solid-state secondary battery (1) as claimed in any of the preceding claims 1 to 11, wherein
the solid electrolyte layer (30) comprises a solid electrolyte or a combination of the solid electrolyte and a gel electrolyte,
the solid electrolyte comprises a sulfide-based solid electrolyte, an oxide-based solid electrolyte, a polymer solid electrolyte, or a combination thereof, and
the gel electrolyte comprises a polymer gel electrolyte.

13. The all-solid-state secondary battery (1) as claimed in any of the preceding claims 1 to 12, wherein the sulfide-based solid electrolyte comprises at least one selected from among Li₂S-P₂S₅, Li₂S-P₂S₅-LiX, wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ wherein m and n are positive numbers, and Z is one of Ge, Zn, or Ga, Li₂S-GeS₂, Li₂S-SiS₂-Li₃PO₄, Li₂S-SiS₂-LiₚMO_{q},wherein p and q are positive numbers and M is one of P, Si, Ge, B, Al, Ga, and In, Li₇₋ₓPS₆₋ₓClₓ,wherein 0≤x≤2, Li₇₋ₓPS₆₋ₓBrₓ,wherein 0≤x≤2, and Li₇₋ₓPS₆₋ₓIₓ,wherein 0≤x≤2,
the sulfide-based solid electrolyte comprises an argyrodite-type solid electrolyte,
the argyrodite-type solid electrolyte comprises one or more selected from among Li₆PS₅Cl, Li₆PS₅Br, and LisPSsl, and
the argyrodite-type solid electrolyte has a density of about 1.5 g/cc to about 2.0 g/cc.

14. The all-solid-state secondary battery (1) as claimed in any of the preceding claims 1 to 13, wherein
at least one of the cathode current collector (11) or the anode current collector (21) comprises a base film and a metal layer on at least one side of the base film,
the base film comprises a polymer,
the polymer comprises polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

15. The all-solid-state secondary battery (1) as claimed in any of the preceding claims 1 to 14, further comprising a first inactive member (40, 40a, 40b) on another side of the cathode current collector (11) and/or another side of the anode current collector (21), and
the first inactive member (40, 40a, 40b) is an elastic member.
